# EUROPEAN PATENT SPECIFICATION

(11) **EP 3 090 235 B1**
(45) Date of publication and mention of the grant of the patent: **19.06.2024**
(21) Application number: 15733075.4
(22) Date of filing: 02.01.2015
(51) Int. Cl.: H04W 4/80, G01C 21/32, G01C 21/34, G01C 21/36, H04W 4/00

(54) **INPUT/OUTPUT FUNCTIONS RELATED TO A PORTABLE DEVICE IN AN AUTOMOTIVE ENVIRONMENT**
EINGABE/AUSGABE-FUNKTIONEN IN BEZUG AUF EINE TRAGBARE VORRICHTUNG IN EINER FAHRZEUGUMGEBUNG
FONCTIONS D'ENTRÉE/SORTIE CONCERNANT UN DISPOSITIF PORTABLE DANS UN ENVIRONNEMENT AUTOMOBILE

(30) Priority: 03.01.2014 US 201461923484 P; 06.01.2014 US 201461923882 P; 07.01.2014 US 201461924418 P
(43) Date of publication of application: 09.11.2016
(73) Proprietor: Google LLC, Mountain View, CA 94043 (US)
(72) Inventor: FOSTER, Andrew, Naremburn, NSW 2065 (AU); PELLY, Nicholas, Julian, Pyrmont, NSW 2009 (AU); HOFMANN, Patrick, Pyrmont, NSW 2009 (AU)
(74) Representative: Seymour-Pierce, Alexandra Isobel
(86) International application number: PCT/US2015/010014
(87) International publication number: WO 2015/103457

(56) References cited:
- US-A1- 2008 147 308
- US-A1- 2008 167 801
- US-A1- 2008 167 801
- US-A1- 2012 163 255
- US-A1- 2013 059 538
- US-A1- 2013 226 369
- US-B2- 7 269 504
- US-B2- 7 424 363

## Description

### FIELD OF TECHNOLOGY

This application generally relates to various functionalities associated with interactions between a portable device and a vehicle head unit.

### BACKGROUND

Today, many car manufacturers offer various components in the head unit of a vehicle, such as displays, speakers, microphones, hardware input controls, etc. Some head units also support short-range communications with external devices such as smartphones, for example. However, head units generally support only very limited communication schemes, such as a direct connection between the head unit and a smartphone via a Bluetooth^{®} link.

Moreover, a modern automotive user interface (UI) in the head unit of the vehicle can include hardware buttons, speakers, a microphone, and a screen to display warnings, car status updates, navigation directions, digital maps, etc. As more and more functions become accessible via the head unit of a car, developers of new functionality face the challenge of providing the corresponding controls in a safe and intuitive manner. In general, hardware buttons on a head unit are small, and operating these buttons can be distracting for the driver. On the other hand, when the head unit includes a touchscreen, large software buttons take up valuable screen real estate (while small software buttons are difficult to operate for the same reason as small hardware buttons).

Furthermore, many navigation systems operating in portable devices or in vehicle head units provide navigation directions, and some of these systems generate audio announcements based on these directions. In general, the existing navigation systems generate directions and audio announcements based only on the navigation route. The directions thus include the same level of detail when the driver is close to her home as when the driver is in unfamiliar area. Some drivers find excessively detailed directions to be so annoying when they are familiar with the area that they turn off navigation or voice assistance from navigation at least for a portion of the route. As a result, they may miss advice on optimal routes (which depend on current traffic), estimations of arrival time, and other useful information. Moreover, drivers who are listening to music or the news in the car also may be annoyed by long announcements even when they are unfamiliar with the area, and a long announcement otherwise seems warranted. Reference is made to US 2013/059538, which discloses a vehicle multimedia head unit with two Bluetooth antennas and two receivers. Further reference is made to US 2012/163255, which discloses a network traffic aggregation method and device for in-vehicle telematics systems using tethering and peer-to-peer networking of mobile devices.

### SUMMARY

Generally speaking, a "primary" portable device such as a smartphone receives data, which can include turn-by-turn directions, audio packets, map images, etc., from another, "secondary" portable device via a short-range communications link and provides the received data to the head unit of a vehicle. The primary portable device also can forward data from the head unit to the secondary device. In this manner, the primary portable device provides a communication link between the head unit and the secondary device, which for various reasons (e., security restrictions, protocol incompatibility, an exceeded limit on the number of simultaneous connections) may not be able to establish a direct connection with the head unit.

According to an aspect of the present invention, there is provided a method for enabling data exchange between portable devices and external output devices according to claim 1. According to an aspect of the present invention, there is provided a portable computing device according to claim 15.

Optional features are set out in the dependent claims.

### BRIEF DESCRIPTION OF THE DRAWINGS

Fig. 1A illustrates a first example environment in which the techniques of the present disclosure can be used to generate audio navigation instructions of variable length;
Fig. 1B illustrates a second example environment in which the techniques of the present disclosure can be used to transfer data from a portable device to a head unit of vehicle via another portable device;
Fig. 1C illustrates a third example environment in which the techniques of the present disclosure can be used to process automotive UI gestures;
Fig. 2A illustrates a first block diagram of an example portable device and an example head unit that can operate in the system of Fig. 1A;
Fig. 2B illustrates a second block diagram of an example pair of portable devices and an example head unit that can operate in the system of Fig. 1B;
Fig. 2C illustrates a third block diagram of an example portable device and an example head unit that can operate in the system of Fig. 1C;
Fig. 3A illustrates a block diagram of a first example communication system in which the portable device and the head unit of Fig. 2A can operate;
Fig. 3B illustrates a block diagram of a second example communication system in which the pair of portable devices and the head unit of Fig. 2B can operate;
Fig. 4 illustrates a message sequence diagram that illustrates an example exchange of information between the components illustrated in Fig. 2B to establish a connection between a portable device and a head unit via another portable device;
Fig. 5 illustrates a combined block and logic diagram that illustrates generation of audio navigation instructions of variable length;
Fig. 6A schematically illustrates discrete pagination of item lists in response to a flick gesture, which can be implemented in the system of Fig. 1C;
Fig. 6B schematically illustrates discrete pagination of a tile-based digital map in response to a flick gesture, which can be implemented in the system of Fig. 1C;
Fig. 7 is a flow diagram of an example method for generating audio instructions of variable length, which can be implemented in the portable device and/or the head unit of Fig. 2A;
Fig. 8 is a flow diagram of an example method for establishing a connection between a pair of portable devices located in a same vehicle, which can be implemented in the example authorization server of Fig. 3B;
Fig. 9 is a flow diagram of an example method for establishing a connection with a head unit and a portable device located in a same vehicle, which can be implemented in one of the portable devices of Figs. 1B, 2B, and 3B;
Fig. 10 is a flow diagram of an example method for establishing a connection with a head unit via another portable device, which can be implemented in one of the portable devices of Figs. 1B, 2B, and 3B;
Fig. 11 is a flow diagram of another example method for establishing a connection between a pair of portable devices located in a same vehicle, which can be implemented in the example authorization server of Fig. 3B; and
Fig. 12 is a flow diagram of an example method for advancing through an ordered set of items in automotive UI in response to a flick gesture, which can be implemented in the system of Fig. 1C.

### DETAILED DESCRIPTION

A portable device (e.g., a smartphone) directly connected to a head unit of a vehicle provides a user interface function for configuring the portable device as an access point via which other portable devices can communicate with the head unit. For convenience, the portable device directly connected to the head unit is referred to below as the primary device, and portable devices that connect to the head unit via the primary device are referred to as secondary devices. In a sense, the primary device operates as a master device and the secondary devices operate as slave devices.

In an example implementation, the primary device advertises an available resource of the head unit, such as a speaker, a screen, a physical control input, etc. If a candidate secondary device is within a certain range of the primary device, a user interface element, such as a speaker icon, appears on the screen of the candidate secondary device. The user of the candidate secondary device can then request a communication link with the master device via the user interface of the candidate secondary device. The master device can accept or reject the request from the candidate secondary device to establish a connection between the two devices.

After a connection is established, the secondary device can transmit data, such as audio packets, images representing digital maps, etc., to the primary device for forwarding to the head unit. Further, the primary device can forward commands or events entered via the head unit ( e.g., "volume up") to the secondary device. In this manner, the primary device can establish a bidirectional communication link between the secondary device and the head unit.

Further, the primary device allows multiple secondary devices to communicate with the head unit, even when the head unit supports only one communication link with a portable device at a time. Thus, one secondary device can provide an audio stream to the head via the primary device, and another secondary device can provide navigation instructions and map images to the head unit. The primary device can be configured to implement the desired access policy for communicating with the head unit.

In an example scenario, the primary device is a smartphone connected to the head unit via a Universal Serial Bus (USB) cable. The passenger wishes to transmit turn-by-turn navigation directions to the head unit from his smartphone to take advantage of the display built into the head unit and the powerful speakers. The driver configures her smartphone to allow discovery of her smartphone by her passenger's smartphone. The passenger then operates his smartphone to locate the driver's smartphone, request and, with the driver's permission, establish a short-range smartphone-to-smartphone communication link, so that the driver's smartphone operates as the primary device and the passenger's smartphone operates as the secondary device. The passenger then launches the navigation application on his smartphone, and the driver's smartphone forwards data packets from the passenger's smartphone to the head unit.

Moreover, at least some of the techniques of this disclosure for processing gesture input in automotive UI can be implemented in an environment which includes a portable device and a vehicle with a head unit. In this example implementation, the portable device provides interactive map and navigation data to the head unit equipped with a touchscreen. The head unit detects driver's gesture-based input applied to the touchscreen and provides an indication of the detected input to the portable device, which updates the display of the map and navigation data via the touchscreen in accordance with the detected input. More particularly, in response to detecting a flick gesture, the portable device advances an ordered set of items by a certain number regardless of the speed of the flick gesture. In this manner, the portable device eliminates a high-cognitive load task and allows the driver of the vehicle to more safely paginate through lists or arrays of items with minimal distractions, and without inadvertently missing information due to excessive velocity of the gesture.

For clarity, at least some of the examples below focus on implementations in which a portable device implements gesture processing functionality but a structured set of items is displayed, and gesture input is received, via a touchscreen embedded in the head unit of a car. However, in another embodiment, the head unit receives as well as processes gesture-based input without relying on the portable device 10 or other external devices. In yet another embodiment, the user applies a flick gesture directly to the portable device, and the portable device adjusts the display of a structured set of items in response to the flick gesture without exporting the display to the head unit. More generally, the techniques of this disclosure can be implemented in one or several devices temporarily or permanently disposed inside a vehicle.

Further, although gesture-based input in the examples below is discussed with reference to touchscreen input, in general the techniques of this disclosure need not be limited to two-dimensional surface gestures. Gesture input in other implementations can include three-dimensional (3D) gestures, such as trajectories of the portable device in a 3D space that fit certain patterns (e.g., the driver making a flicking motion forward or backward while the portable device is in her hand). In these implementations, the display of a structured set of items provided via the head unit and/or the portable device can advance by a certain number of items in response to such a 3D gesture regardless of how quickly or slowly the driver flicked the portable device. Further, 3D gestures in some implementations can be detected via video cameras and/or other sensors and processed in accordance computer vision techniques.

In another embodiment, the techniques for dynamically varying length of an audio navigation instruction (as well the length of an interval between two successive audio instructions) during a navigation session can be implemented in a portable device, a head unit of a car, one or several network servers, or a system that includes several of these devices. However, for clarity, at least some of the examples below focus primarily on an embodiment in which a navigation application executes on a portable user device, generates audio navigation instructions (for simplicity, "audio instructions") using navigation data and familiarity score signals received from one or several network servers, and provides instructions to a head unit of a car.

### Example hardware and software components

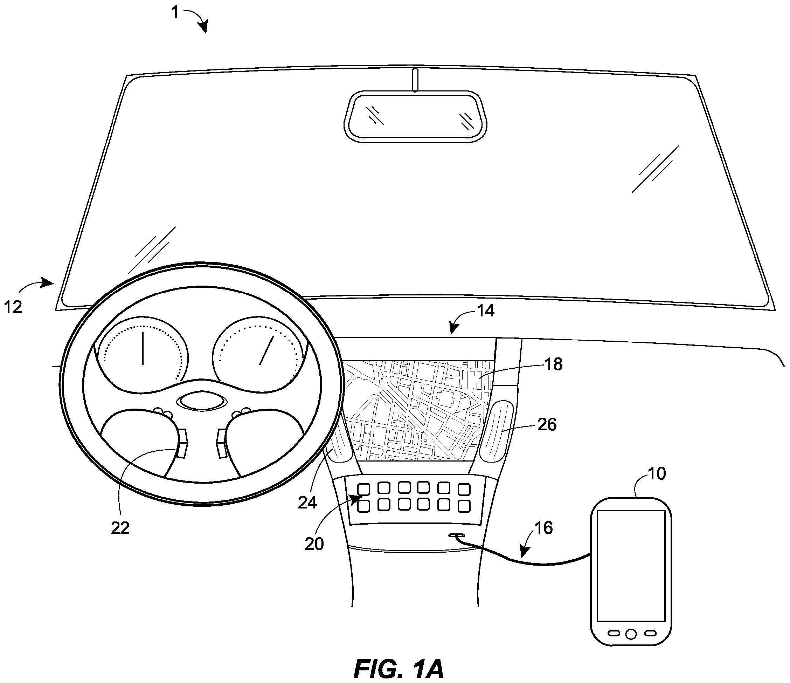

Referring to Fig. 1A, a first example environment 1 in which the techniques outlined above can be implemented for dynamically varying length of an audio instruction, includes a portable device 10 and a vehicle 12 with a head unit 14. The portable device 10 may be a smart phone or a tablet computer, for example. The portable device 10 communicates with the head unit 14 of the vehicle 12 via a communication link 16, which may be wired (e.g., Universal Serial Bus (USB)) or wireless (e.g., Bluetooth, Wi-Fi Direct). The portable device 10 also can communicate with various content providers, servers, etc. via a wireless communication network such as a fourth- or third-generation cellular network (4G or 3G, respectively).

In operation, the portable device 10 obtains navigation data to navigate the driver from point A to point B in the form of a sequence of instructions or maneuvers. As discussed in more detail below, the portable device 10 can receive navigation data via a communication network from a navigation service or can generate navigation data locally, depending on the implementation. Based on such factors as the driver's familiarity with the route, the current level of audio in the vehicle 12, and the current state of the vehicle 12, the portable device 10 generates audio instructions at varying levels of detail. For example, the portable device 10 can shorten or even omit certain audio instructions upon determining, with a certain degree of confidence, that the driver is very familiar with the route. As another example, the portable device can omit an audio instruction to turn left if the head unit 14 reports that the driver already activated the left turn signal.

Besides generating condensed audio instructions describing maneuvers or omitting audio instructions, the portable device 10 in some cases can adjust the intervals between audio instructions. For example, the portable device 10 can determine that descriptions of several maneuvers can be combined to direct the driver to "Highway 94" and the driver is familiar with the relevant portion of this highway, the portable device 10 can combine the several descriptions to form a single audio instruction such as, "Start out going East and turn right onto Highway 94."

The embodiments of these techniques may require that, in order for the portable device 10 to use information related to driver's familiarity with the route and other information specific to the driver, he or she select certain settings and/or install certain applications.

The head unit 14 can include a display 18 for presenting navigation information such as a digital map. The display 18 in some implementations is a touchscreen and includes a software keyboard for entering text input, which may include the name or address of a destination, point of origin, etc. Hardware input controls 20 and 22 on the head unit 14 and the steering wheel, respectively, can be used for entering alphanumeric characters or to perform other functions for requesting navigation directions. The head unit 14 also can include audio input and output components such as a microphone 24 and speakers 26, for example. The speakers 26 can be used to play the audio instructions sent from the portable device 10.

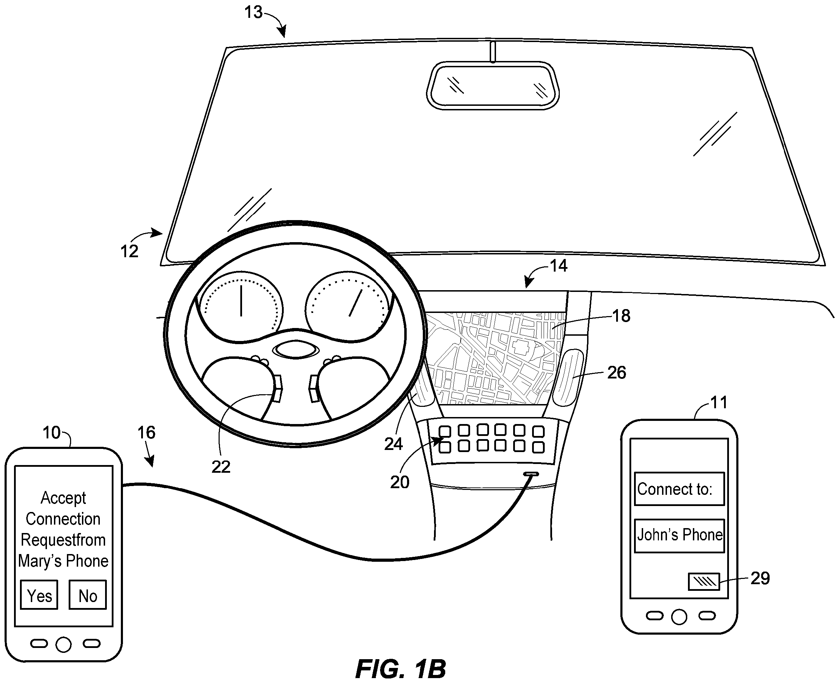

Referring to Fig. 1B, a second example environment 13 in which the techniques outlined above can be implemented for transferring data from a portable device to a head unit of a vehicle via another portable device, includes a primary device 10, at least one secondary device 11, and a vehicle 12 with a head unit 14. Each of the primary device 10 and the secondary device 11 may be a smart phone, tablet, wearable computer, etc. Similar to Fig. 1A, the primary device 10 communicates with the head unit 14 of the vehicle 12 via a communication link 16, which may be wired (e.g., USB) or wireless (e.g., Bluetooth^{®}, Wi-Fi Direct^{™}). Similarly, the primary device 10 and the secondary device 11 can communicate via a short-range wireless or wired communication link. Each of the primary device 10 and the secondary device 11 can also communicate with various content providers, servers, etc. via a wireless communication network such as a fourth- or third-generation cellular network (not shown to avoid clutter).

In operation, the second device 11 transmits data to the primary device 10, which in turn provides the transmitted data to the head unit 14. The transmitted data in the example of Fig. 1B includes digital map images. The head unit 14 displays this information via a display 18. The display 18 in some implementations is a touchscreen and includes a software keyboard for entering text input. Another type of the display 18 can be a non-touch screen provided along with an input device such as a rotary controller, for example, or a separate touch pad. In general, the display 18 need not be capable of displaying both text and images. A head unit in another vehicle can include, for example, a simple display only capable of displaying alphanumeric characters on one or several lines.

The head unit 14 can include hardware input controls such as buttons, knobs, etc. These controls can be disposed on the head unit 14 or elsewhere in the vehicle 12. For example, the vehicle 12 in Fig. 1B includes navigation controls 20 on the head unit 14 as well as steering wheel controls 22 communicatively coupled to the head unit 14. The controls 20 and 22 can be mapped to a variety of navigation control functions on the primary device 10, if desired. The controls 20 and 22 in some implementations also can be used for entering alphanumeric characters.

The vehicle 12 also can include an audio input component such a microphone 24 and an audio output component such as speakers 26, for example. Similar to the hardware controls 20 and 22, the microphone 24 and speakers 26 can be disposed directly on the head unit 14 or elsewhere in the vehicle 12.

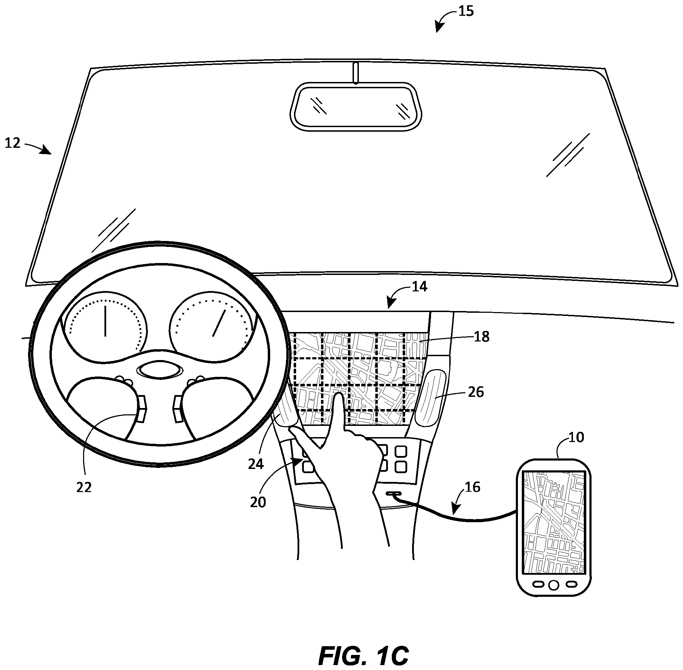

Referring to Fig. 1C, a third example environment 15 in which the techniques outlined above can be implemented for processing automotive UI gestures, includes a portable device 10, and a vehicle 12 with a head unit 14. The portable device 10 may be a smart phone, tablet, wearable computer, etc. The portable device 10 communicates with the head unit 14 vehicle 12 via a communication link 16, which may be wired, such as Universal Serial Bus (USB), or wireless, such as Bluetooth^{®} or Wi-Fi Direct^{™}. The portable device 10 also can communicate with various content providers, servers, etc. via a wireless communication network such as a fourth- or third-generation cellular network (4G or 3G, respectively).

The head unit 14 can include hardware input controls such as buttons, knobs, etc. These controls can be disposed on the head unit 14 or elsewhere in the vehicle 12. For example, the vehicle 12 in Fig. 1C includes hardware controls 20 on the head unit 14 as well as hardware controls 22 on the steering wheel that are also communicatively coupled to the head unit 14. The controls 20 and 22 can be mapped to a variety of navigation control functions on the portable device 10. For example, the "volume up" button can be mapped to the "next navigation instruction" function of the mapping and navigation software module running on the portable device 10. The controls 20 and 22 in some implementations also can be used for entering alphanumeric characters.

Further, the vehicle 12 can include an audio input and output components such a microphone 24 and speakers 26, for example. Similar to the hardware controls 20 and 22, the microphone 24 and speakers 26 can be disposed directly on the head unit 14 or elsewhere in the vehicle 12.

Although the touchscreen 18 in Fig. 1C is embedded in the head unit 14, in general a touch surface can be provided in any suitable manner, e.g., on the wheel or windshield of the vehicle 12, on the portable device 10, on a separate dedicated device, etc.

In an example scenario, the portable device 10 executes a mapping and navigation software module which provides a digital map partitioned into several map "tiles" to the head unit 14. Each map tile can be an image in a bitmap format, for example. The head unit 14 receives the map tiles, assembles these map tiles into a map image, and displays the map image on the touchscreen 18. For additional clarity, Fig. 1C schematically illustrates portioning of the digital map being displayed on the touchscreen 18 into several tiles. However, it will be understood that a user in a typical implementation does not see the seams between tiles, and that the head unit 14 presents the digital map as a single image.

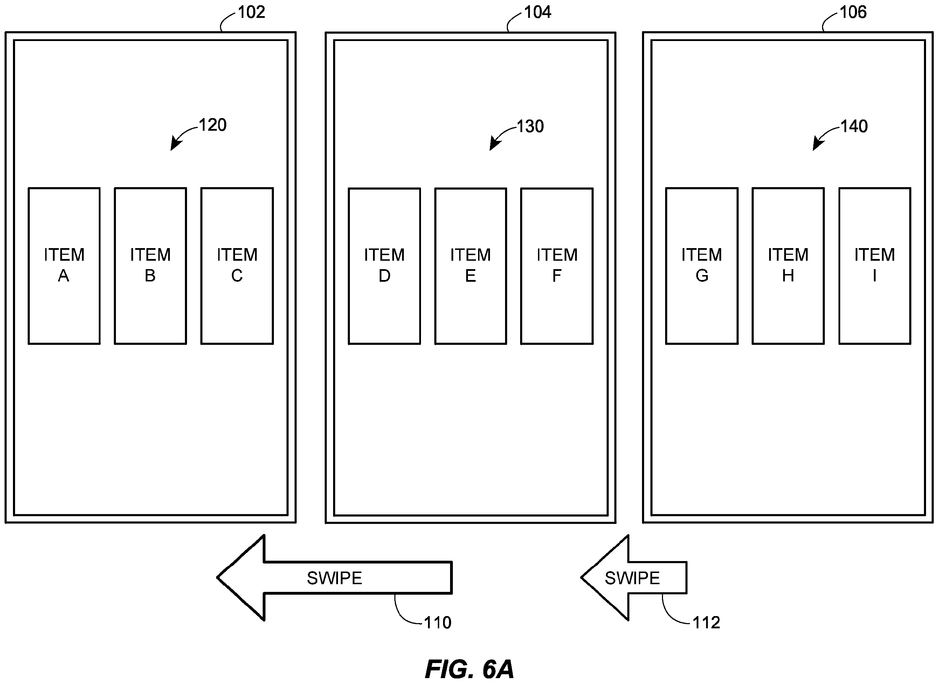

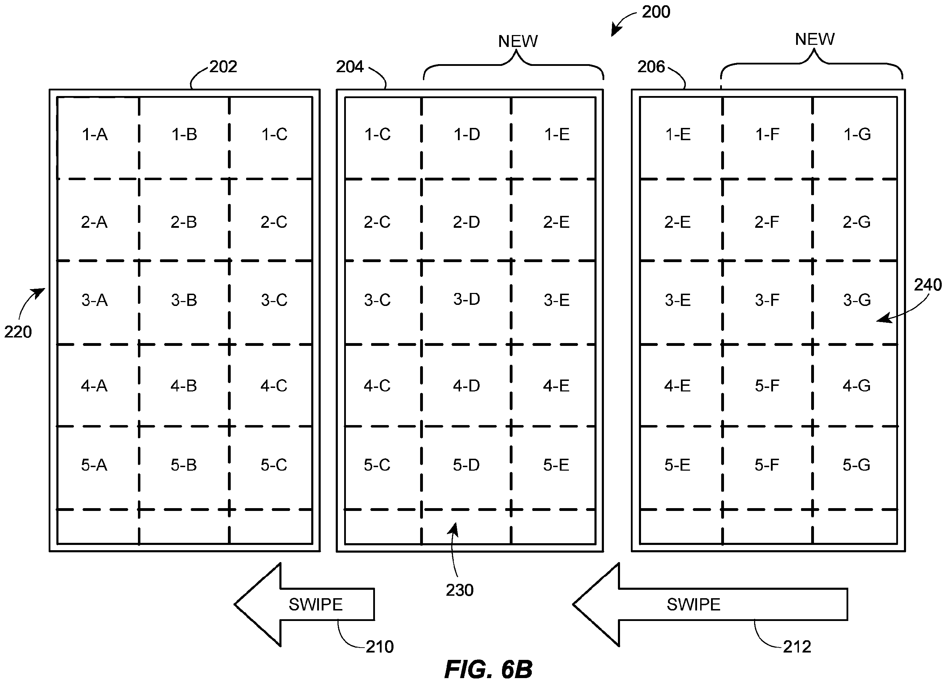

When a user (typically, the driver of the vehicle 12) puts his finger on the touchscreen 18 and flicks the map image to the right, for example, the head unit 14 reports the flick gesture to the portable device 10. In response, the portable device 10 provides new map tiles to the head unit 14 for display. More specifically, the portable device 10 can advance the array of map tiles so that, regardless of how quickly or slowly the driver flicked the map image, the head unit 14 now displays tiles adjacent to the ones previously displayed on the head unit 14. This and other implementations are discussed in more detail with reference to Figs. 6A and 6B.

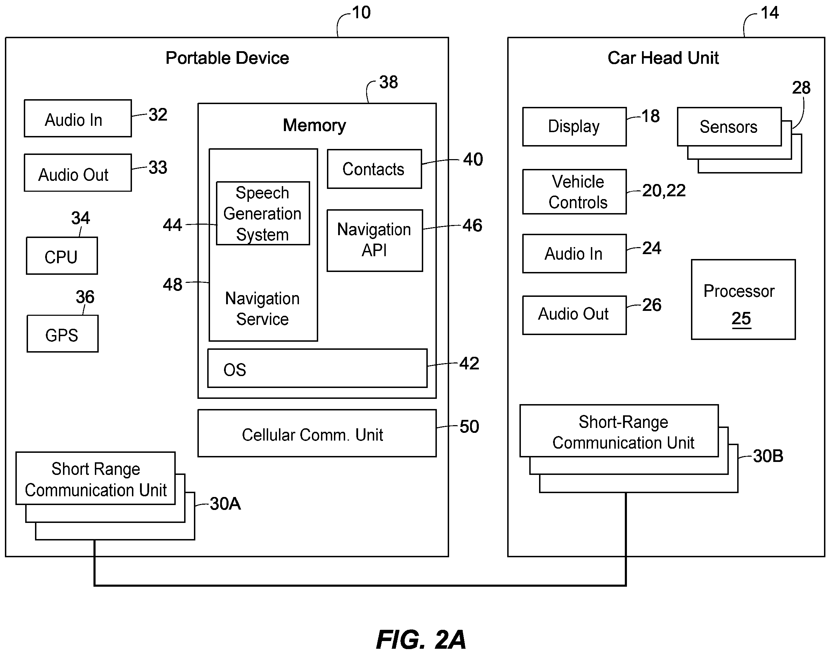

A first example implementation of the portable device 10 and the head unit 14 is discussed next with reference to Fig. 2A. As discussed above, the head unit 14 can include a display 18, hardware controls 20, 22, an audio input unit 24, and an audio output unit 26. The head unit also can include a processor 25, a set of one or several sensors 28, and one or several short-range communication units 30B.

The set of sensors 28 can include, for example, a global positioning system (GPS) module to determine the current position of the vehicle in which the head unit 14 is installed, an inertial measurement unit (IMU) to measure the speed, acceleration, and current orientation of the vehicle, a device to determine whether or not the turn signal has been pushed up or down. etc. Although Fig. 2A depicts the set of sensors inside the head unit 14, it is noted that the sensors 28 need not be integral components of the head unit 14. Rather, a vehicle can include any number of sensors in various locations, and the head unit 14 can receive data from these sensors during operation. In operation, the sensors 28 can be used for determining the state of the vehicle 12.

A short-range communication unit 30B allows the head unit 14 to communicate with the portable device 10. The short-range communication unit 30B may support wired or wireless communications, such as USB, Bluetooth, Wi-Fi Direct, Near Field Communication (NFC), etc.

The processor 25 can operate to format messages transmitted between the head unit 14 and the portable device 10, process data from the sensors 28 and the audio input 24, display map images via the display 18, play audio instructions via the audio output, etc.

The portable device 10 can include a short-range communication unit 30A for communicating with the head unit 14. Similar to the unit 30B, the short-range communication unit 30A can support one or more communication schemes such as USB, Bluetooth, Wi-Fi Direct, etc. The portable device 10 can include audio input and output components such as a microphone 32 and speakers 33. Additionally, the portable device 10 includes one or more processors or CPUs 34, a GPS module 36, a memory 38, and a cellular communication unit 50 to transmit and receive data via a 3G cellular network, a 4G cellular network, or any other suitable network. The portable device 10 can also include additional sensors (e.g., an accelerometer, a gyrometer) or, conversely, the portable device 10 can rely on sensor data supplied by the head unit 14. In one implementation, to improve accuracy during real-time navigation, the portable device 10 relies on the positioning data supplied by the head unit 14 rather than on the output of the GPS module 36.

The memory 38 can store, for example, contacts 40 and other personal data of the driver. As illustrated in Fig. 2A, the memory also can store instructions of an operating system 42, and a speech generation system 44 as part of a navigation service application 48 that invokes a navigation API 46 during operation. The speech generation system 44 can generate audio instructions which can be played out of the speakers 33 in the portable device 10 or the speakers 26 in the head unit 14. In some embodiments, the audio instructions can be generated at a remote server such as a navigation server. The speech generation system 44 can then receive the generated audio instructions and play them out of the speakers 33 in the portable device 10 or the speakers 26 in the head unit.

The software components 42, 44, and 48 can include compiled instructions and/or instructions in any suitable programming language interpretable at runtime. In any case, the software components 42, 44, and 48 execute on the one or more processors 34. In one implementation, the navigation service application 48 is provided as a service on the operating system 42 or otherwise as a native component. In another implementation, the navigation service application 48 is an application compatible with the operating system 42 but provided separately from the operating system 42, possibly by a different software provider.

The navigation API 46 generally can be provided in different versions for different respective operating systems. For example, the maker of the portable device 10 can provide a Software Development Kit (SDK) including the navigation API 46 for the Android^{™} platform, another SDK for the iOS^{™} platform, etc.

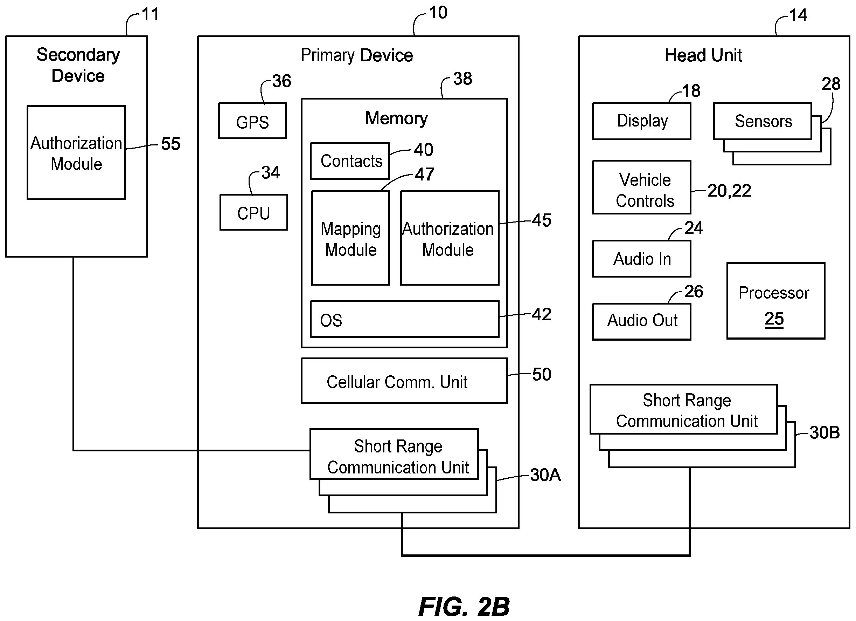

An example implementation of the primary device 10, secondary device 11 and head unit 14 is discussed with reference to Fig. 2B. As illustrated in Figs. 1A-C and 2A-C, the head unit 14 includes a display 18, hardware controls 20, 22, an audio input unit 24, and an audio output unit 26. The head unit 14 also can include a processor 25, a set of one or several sensors 28, and one or several short-range communication units 30B.

The set of sensors 28 can include, for example, a global positioning system (GPS) module to determine the current position of the vehicle in which the head unit 14 is installed, an inertial measurement unit (IMU) to measure the speed, acceleration, and current orientation of the vehicle, a barometer to determine the altitude of the vehicle, etc. Although Fig. 2B depicts the set of sensors 28 inside the head unit 14, it is noted that the sensors 28 need not be integral components of the head unit 14. Rather, a vehicle can include any number of sensors in various locations, and the head unit 14 can receive data from these sensors during operation.

Depending on the implementation, the processor 25 can be a general-purpose processor that executes instructions stored on a computer-reader memory (not shown) or an application-specific integrated circuit (ASIC) that implements the functionality of the head unit 14. In any case, the processor 25 can operate to format messages from the head unit 14 to the primary device 10, receive and process messages from the primary device 10, display map images via the display 18, play back audio messages via the audio output 26, etc.

With continued reference to Fig. 2B, the primary device 10 also includes one or more processors or CPUs 34, a GPS module 36, a memory 38, and a cellular communication unit 50 to transmit and receive data via a 3G cellular network, a 4G cellular network, or any other suitable network. The primary device 10 also can include additional components such as a graphics processing unit (GPU), for example. In general, the primary device 10 can include additional sensors (e.g., an accelerometer, a gyrometer) or, conversely, the primary device 10 can rely on sensor data supplied by the head unit 14. In one implementation, to improve accuracy during real-time navigation, the primary device 10 relies on the positioning data supplied by the head unit 14 rather than on the output of the GPS module 36.

One or several short-range communication units 30A allow the primary device 10 to communicate with the head unit 10 as well as with the secondary device 11. The short-range communication unit 30A may support wired or wireless communications, such as USB, Bluetooth, Wi-Fi Direct, Near Field Communication (NFC), etc. In some scenarios, the primary device 10 establishes different types of connections with the head unit 14 and the secondary device 11. For example, the primary device 10 can communicate with the head unit 14 via a USB connection and with the secondary device 11 via a Bluetooth connection.

The memory 38 can store, for example, contacts 40 and other personal data of the user. As illustrated in Fig. 2B, the memory 38 in one embodiment also stores computer-readable instructions that implement an authorization module 45 for establishing connections and facilitating communications between a primary device 10 and a secondary device 11, and a mapping module 47 to generate or obtain from a network server digital map images, turn-by-turn navigation instructions, etc. The software components 45 and 47 can include compiled instructions and/or instructions in any suitable programmable language interpretable at runtime. In any case, the software components 45, and 47 execute on the one or more processors 34.

An authorization module 55 in some implementations includes the same software instructions as the authorization module 45. In other implementations, the authorization modules 45 and 55 implement the same set of functions, but include different instructions for different platforms. Example functionality of the authorization modules 45 and 55 is discussed in more detail below. Although the secondary device 11 is depicted for simplicity as having only an authorization module 55, it will be understood that the secondary device 11 can have the same or similar architecture as the primary device 10. Furthermore, although only one secondary device 11 is depicted, the described system can implement more than one secondary device.

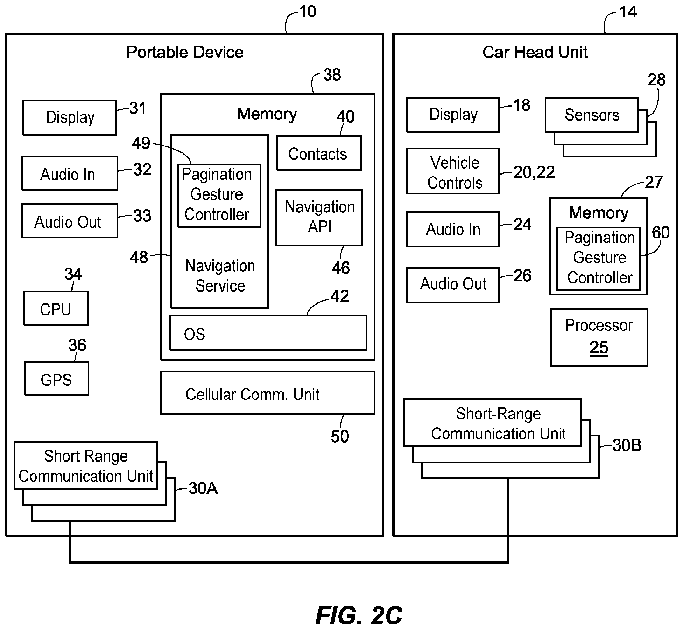

A third example implementation of the portable device 10 and head unit 14 is briefly considered with reference to Fig. 2C. As indicated above, the head unit 14 can include a touchscreen 18, hardware controls 20, 22, an audio input unit 24, and an audio output unit 26. The head unit 14 also can include one or more processors 25, a set of one or several sensors 28, and one or several short-range communication units 30B. Each of the short-range communication units 30B allows the head unit 14 to communicate with the portable device 10. The short-range communication unit 30B may support wired or wireless communications, such as USB, Bluetooth, Wi-Fi Direct, Near Field Communication (NFC), etc.

The set of sensors 28 can include, for example, a global positioning system (GPS) module to determine the current position of the vehicle in which the head unit 14 is installed, an inertial measurement unit (IMU) to measure the speed, acceleration, and current orientation of the vehicle, a barometer to determine the altitude of the vehicle, etc. Although Fig. 2C depicts the set of sensors 28 inside the head unit 14, it is noted that the sensors 28 need not be integral components of the head unit 14. Rather, a vehicle can include any number of sensors in various locations, and the head unit 14 can receive data from these sensors during operation.

Depending on the implementation, the processor 25 can be a general-purpose processor that executes instructions stored on the computer-reader memory 27 or an application-specific integrated circuit (ASIC) that implements the functionality of the head unit 14. In any case, the processor 25 can operate to format messages from the head unit 14 to the portable device 10, receive and process messages from the portable device 10, display map images via the display 18, play back audio messages via the audio output 26, etc.

The portable device 10 can include one or more short-range communication units 30A for communicating with the head unit 14. Similar to the short-range communication unit 30B, the short-range communication unit 30A can support one or more short-range communication schemes. The portable device 10 also can include one or more processors or CPUs 34, a GPS module 36, a memory 38, and a cellular communication unit 50 to transmit and receive data via a 3G cellular network, a 4G cellular network, or any other suitable network. The portable device 10 also can include additional components such as an audio input device 32, an audio output device 33, a touchscreen 31 or other user interface components, etc.

The memory 38 can store, for example, contacts 40 and other personal data of the user. As illustrated in Fig. 2C, the memory 38 also can store instructions of an operating system (OS) 42 and a navigation service application 48 that executes on the OS 42. The navigation service application 48 in operation can format and transmit requests for map data to a map data server via a long-range communication network, receive map data (e.g., in a vector format, a raster format, or both), generate digital map tile images based on the map data, and provide these map tile images to the head unit 14. Similarly, the navigation service application 48 can receive search results in response to a user query, navigation directions, and other information which can be provided as images, text, and or/audio to the head unit 14.

In one implementation, the navigation service application 48 is provided as a service on the operating system 42 or otherwise as a native component. In another implementation, the navigation service application 48 is an application compatible with the operating system 42 but provided separately from the operating system 42, possibly by a different software provider. Further, in some implementations, the functionality of the navigation service application 48 is implemented software component that operates in another software application (e.g., a web browser).

The memory 38 also can store a navigation API 46 to allow other software applications executing on the portable device 10 to access the functionality of the navigation service application 48. For example, a manufacturer of the car head unit 14 can develop an application that runs on the OS 42 and invokes the navigation API 46 to obtain navigation data, map data, etc.

In general, the software components 46 and 48 can include compiled instructions and/or instructions in any suitable programmable language interpretable at runtime. In any case, the software components 46 and 48 execute on the one or more processors 34.

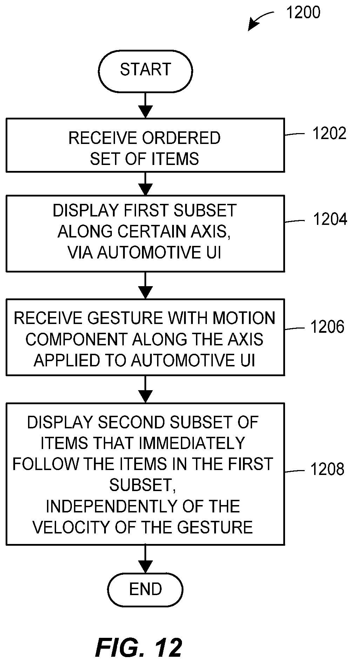

As illustrated in Fig. 2C, the navigation service application 48 can implement a pagination gesture controller 49 configured to process gestures received via the touchscreen 18 or, in other scenarios, via the user interface of the portable device 10. Example functionality of the pagination gesture controller 44 is further discussed below with reference to Figs. 6A, 6B, and 12. It will be understood that although the pagination gesture controller 49 in the example implementation of Fig. 2C operates as a component of the navigation service application 48, in general the pagination gesture controller 49 can operate in any suitable software framework to process gesture-based user input and display structured sets of items via a head unit of a vehicle or the UI of the portable device in a manner that is intuitive and safe for a driver.

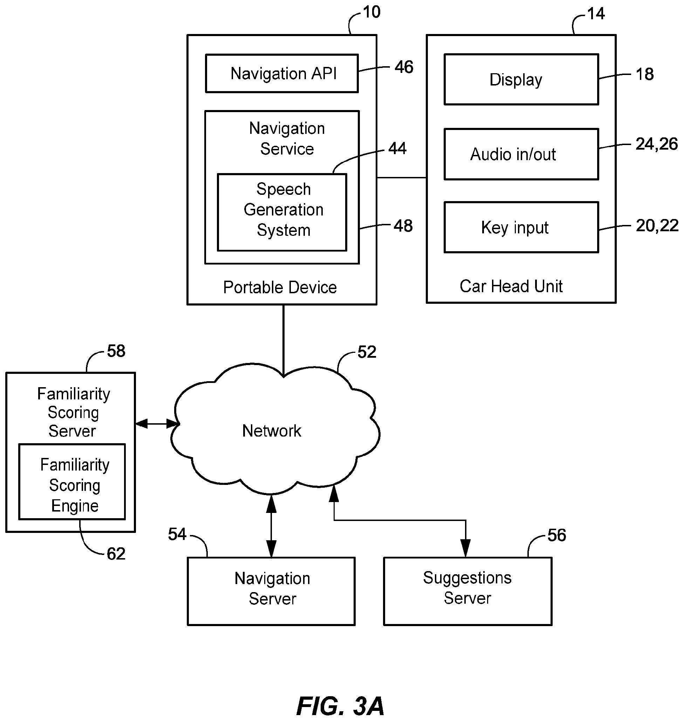

Fig. 3A illustrates a first example communication system in which the portable device 10 can operate to obtain navigation data in response to user requests submitted via the head unit 14 or the portable device 10. For ease of illustration, the portable device 10 and the head unit 14 are illustrated in a Fig. 3A in a simplified manner, i.e., without some of the components illustrated in Fig. 2A and/or discussed elsewhere in this disclosure.

The portable device 10 has access to a wide area communication network 52 such as the Internet via a long-range wireless communication link (e.g., a cellular link). Referring back to Fig. 2A, the portable device 10 can access the communication network 52 via a cellular communication unit 50. In the example configuration of Fig. 3A, the portable device 10 communicates with a navigation server 54 that provides navigation data and map data, a suggestion server 56 that generates suggestions based on partial user input, and a familiarity server 58 in which a familiarity scoring engine 62 analyzes user data in accordance with such signals as, for example, the user's past navigation requests and the user's home location to estimate the driver's familiarity with a route or location (provided the user selected certain settings and/or installed certain applications, according to at least some of the embodiments). For each maneuver, the familiarity scoring engine 62 can generate a metric such as a score in the range of [0, 100], for example, to reflect the estimated probability that the driver is familiar with the corresponding segment of the route.

With reference to Fig. 2A, in some implementations the speech generation system 44 can be a part of the navigation server 54, the portable device 10, or a combination of the navigation server 54 and the portable device 10. For example, in some embodiments, a portion of the speech generation system 44 included in the portable device 10 may receive audio navigation instructions generated by a portion of the speech generation system 44 included in the navigation server 54 or an audio generation server (not shown). The speech generation system 44 may then play the received audio navigation instructions on the portable device 10. Further, the familiarity scoring engine 62 may be implemented in the portable device 10 rather than in a network server.

More generally, the portable device 10 can communicate with any number of suitable servers. For example, in another embodiment, the navigation server 54 provides directions and other navigation data while a separate map server provides map data (e.g., in a vector graphics format), a traffic data provides traffic updates along the route, a weather data server provides weather data and/or alerts, an audio generation server may generate audio navigation instructions, etc.

According to an example scenario, a driver requests navigation information by pressing appropriate buttons on the head unit of the vehicle and entering a destination. The head unit provides the request to the portable device, which in turn requests navigation data from a navigation server. Referring collectively to Figs. 1A, 2A, and 3A to illustrate a more specific example, the head unit 14 can provide the request to the portable device 10, in which a software application servicing the connection with the head unit 14 invokes the API 46 to provide the destination to the navigation server 54. The navigation server 54 then sends the navigation data in the form of a description of a sequence of maneuvers to the speech generation system 44, which generates audio instructions of varying levels of detail. The portable device 10 then provides the audio instructions to the head unit 14 for audio playback.

In other embodiments, the portable device 10 may generate a video (which can include static imagery or a video stream) of map data, for example, and transmit the video to the head unit 14. The head unit 14 may then receive touch events from the user on the display 18. In such an embodiment, the head unit 14 does not interpret the touch events and instead transmits the touch events in a "raw" format. For example, the user may tap a section of the display 18 corresponding to a point of interest to select a destination or the user may perform a series of swipe gestures to toggle through previous destinations stored on the portable device 10. The "raw" touch events may be transmitted to the portable device 10 which interprets the "raw" touch events to determine the requested navigation information from the user. For example, the portable device 10 may generate a video which includes a map of Sydney, Australia, and may transmit the video to the head unit 14. The user may then tap the upper right corner of the display 18 corresponding to the Sydney Opera House. As a result, the head unit 14 may transmit the "raw" touch event (e.g., a tap of the upper right corner of the display) to the portable device 10, and the portable device may determine that the user requested navigation directions to the Sydney Opera House based on the "raw" touch event.

It will be understood that in other implementations, the driver or a passenger can provide the destination (and, if desired the source when different from the current location) via the audio input 32 of the portable device 10 or the audio input 24 of the head unit 14. Further, the navigation service 48 in some implementations can determine directions for a route using data stored in the portable device 10.

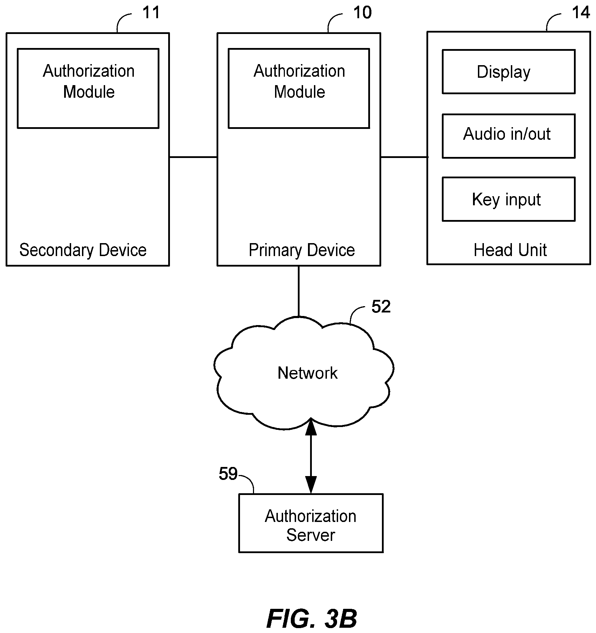

Fig. 3B illustrates a second example communication system in which the secondary device 11 can operate to transmit data to the head unit 14 via the primary device 10. For ease of illustration, the primary device 10 and the head unit 14 are illustrated in Fig. 3B in a simplified manner.

The primary device 10 and secondary device 11 in this implementation have access to a wide- area communication network 52 such as the Internet via long-range wireless communication links (e.g., a cellular link). Referring back to Fig. 2B, the primary device 10 and secondary device 11 can access the communication network 52 via respective instances of the cellular communication unit 50. In the example configuration of Fig. 3B, the primary device 10 and secondary device 11 have access to an authorization server 59 which generates connection parameters and transmits the connection parameters to the primary device 10 and secondary device 11 over the wide area connection network 52.

To again consider an example scenario with reference to Figs. 1B, 2B, and 3B, the secondary device 11 controlled by a passenger of a vehicle transmits data to the head unit 14 via the primary device 10 controlled by the driver of the vehicle. The primary device 10 is connected to the head unit 14 and advertises one or more available head unit resources, such as a display, a speaker, a hardware input control, etc. The secondary device 11 transmits a connection request to the authorization server 59 to establish a connection with the primary device 10. The authorization server 59 transmits an authorization request to receive permission from the driver to establish a connection between the primary device 10 and the secondary device 11. The driver submits an input indicating that the driver allows the connection, and a connection is established between the primary device 10 and the secondary device 11.

### Example sequence diagram for enabling communication between the secondary device and the head unit

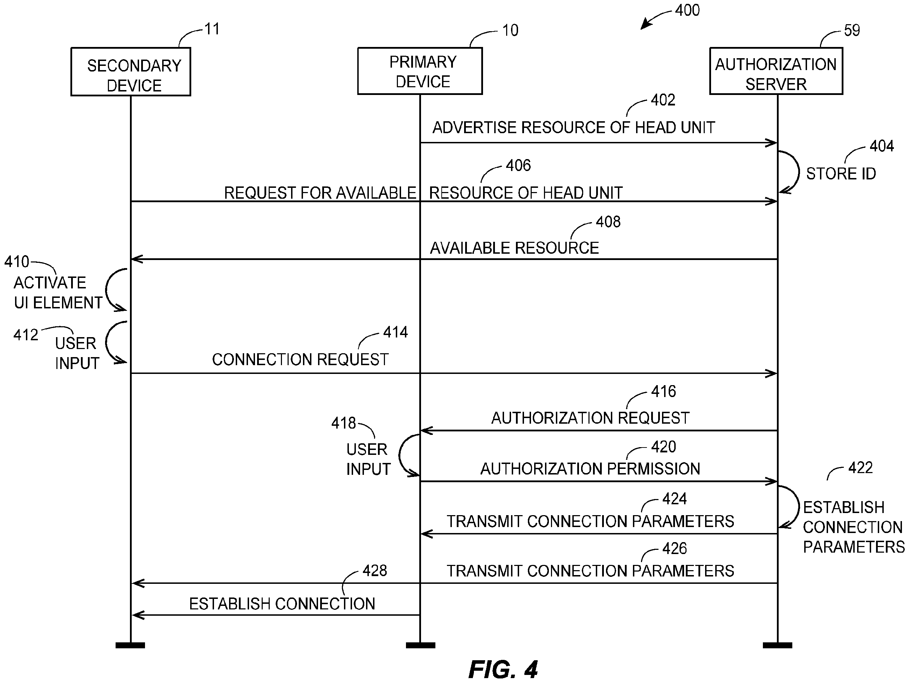

For further clarity, an example message sequence diagram 400 corresponding to this scenario is depicted in Fig. 4. Each vertical line schematically represents the timeline of the corresponding component, with events depicted lower on the page occurring after the events depicted higher on the page. The flow of information between the components is represented by arrows. An arrow in different situations can represent a message propagated between different physical devices, a message propagated between tasks running on the same device, a function call from one software layer to another software layer, a callback function invoked in response to a triggering event, etc. Further, a single arrow in some cases can represent a sequence of function calls and/or messages.

As illustrated in Fig. 4, the primary device 10 advertises an available resource of the head unit to the authorization server 59 (event 402). For example, a driver may submit input indicating that the driver wishes to advertise the resource or a setting of the primary device 10 may indicate that available resources are to be advertised under certain conditions. In some embodiments, the primary device 10 advertises an available resource of the head unit 14 via a social networking service.

The authorization server 59 receives the message (402) advertising the resource and stores some or all of the identifier of the primary device 10, indications of the available resource(s), as well as the location of the primary device 10 (event 404). The secondary device 11 transmits a request for available head unit resources to the authorization server 59 (event 406). The authorization server 59 receives the request along with a device identifier of the secondary device 11 and the location of the secondary device 11. The authorization server 59 determines whether there is a primary device advertising available head unit resources within a certain range of the secondary device 11. In the illustrated scenario, the authorization server 59 determines that the primary device 10 is advertising an available head unit resource within the relevant range, and transmits a response 408 to the secondary device 11. The response 408 can indicate the available resource and the device identifier of the primary device 10.

In response to receiving the response 408 from the authorization server 59, the secondary device 11 in this example activates a UI element on the screen (event 410). For example, if the available resource advertised is a speaker, an interactive speaker icon may appear on the display of the secondary device 11. The passenger can select the speaker icon to choose to stream music from the secondary device 11 to the head unit 14 via the primary device 10.

In some embodiments, the primary device 10 also locally advertises the available resource to portable devices within a certain distance. Similarly, the secondary device 11 may attempt to discover primary devices within a proximate distance. In these embodiments, the secondary device 11 receives the transmission of the advertised available resource of the head unit 14 and transmits the device identifiers of the primary device 10 and the secondary device 11 to the authorization server 59. Turning briefly to Fig. 1B, a user interface icon 29 can be displayed on the screen of the secondary device 11. Additionally, the screen of the secondary device 11 can display a dialogue presenting proximate devices with available head unit resources.

Referring again to the message sequence diagram of Fig. 4, the passenger submits input (412) that indicates that the passenger wishes to use the available resource advertised by the primary device 10. For example, the user may click on the icon, select the primary device 10 from a list of available proximate devices, etc. The secondary device 11 processes the user input 412 and transmits a connection request (event 414) , including the device identifier of the primary device 10, to the authorization server 59.

With continued reference to the example scenario of Fig. 4, the authorization server 59 receives the connection request 414 and transmits an authorization request 416 to the primary device 410. The authorization request 416 may include a description of the secondary drive 11 (i.e. "John's Phone"), so that the driver can confirm that the correct secondary device 11 is connected. Turning briefly again to Fig. 1B, a sample dialogue is displayed on the screen of the primary device 10, requesting that the user either accept or reject the connection request from the secondary device 11.

The driver then indicates that she gives permission to establish a connection between the primary device 10 and the secondary device 11 (event 418). The primary device in response to the event 418 transmits an authorization permission message 420 to the authorization server 59. The authorization server 59 receives the authorization permission 420 and determines connection parameters (event 422), which may include an indication of a type of connection to be established between the devices 10 and 11 (e.g., Bluetooth, Wi-Fi Direct, infrared), a time interval during the connection must be established, etc. The authorization server 59 transmits the connection parameters to the primary device 10 and the secondary device 11 (event 426).

The primary device 10 receives the connection parameters and establishes a connection with the secondary device 11 (event 428). Once the connection is established, the secondary device 11 can transmit data to the head unit 14 via the primary device 10. In some implementations, the authorization is symmetric, so that if the primary device 10 becomes a secondary device at a later time, the devices 10 and 11 can exchange data without further authorization.

### Example logic for dynamically varying the length of audio instructions and intervals

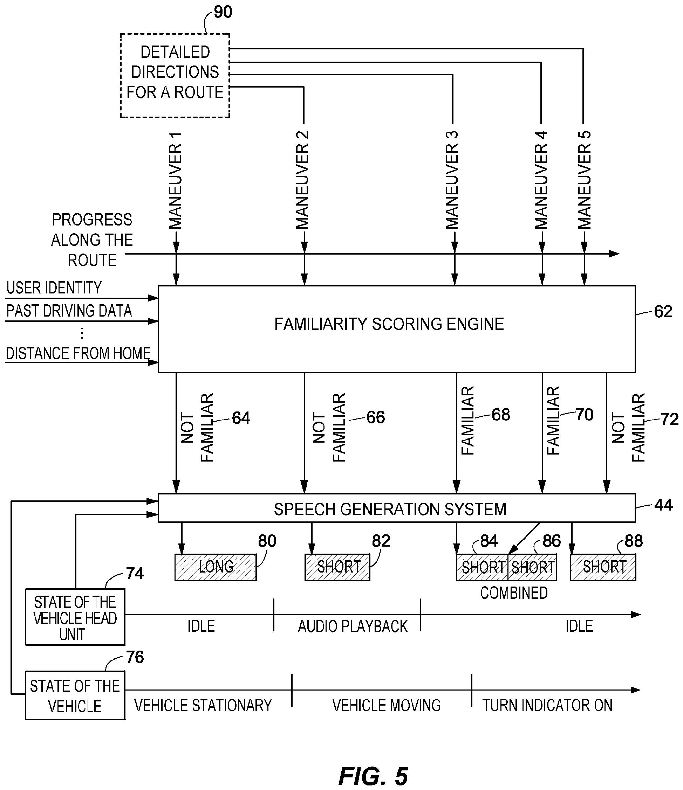

With reference to Fig. 2A and the techniques for dynamically varying the length of audio instructions, Fig. 5 schematically illustrates how the speech generation system 44 determines the appropriate level of detail for an audio navigation instruction in an example scenario. Some of the blocks in Fig. 5 represent hardware and/or software components (e.g., blocks 44 and 62), other blocks represent data structures or memory storing these data structures, registers, or state variables (e.g., blocks 74, 76, and 90), and other blocks represent output data (e.g., blocks 80 - 88). Input signals are represented by arrows labeled with corresponding signal names.

Similar to the examples above, the terms "user" and "driver" are used interchangeably, but it will be understood that navigation audio instructions can be generated, and personalized, for a passenger of the car if the passenger's portable device is used for navigation, for example.

The system of Fig. 5 receives detailed directions for a route 90 in a file from the navigation server 54 of Fig. 3A or from a navigation engine operating locally in the same device, for example. In this example, the detailed directions 90 consist of descriptions of maneuvers 1-5, but in general the detailed directions 90 can contain any number of maneuvers.

As illustrated in Fig. 5, the familiarity scoring engine 62 receives descriptions of maneuvers as well as user-specific data such as user identity data, past driving data, and an indication of distance between the user and her home location. Some or all of this data can come from a user profile maintained by an online service that provides navigation data, for example. The online service also may allow the user to store his personal preferences such as preferred routes, toll/no toll road preferences, etc. In addition, the user can store a home location which may be selected to direct the user to her home or can be used to determine the distance from the user's home for a maneuver. The user profile can also reflect the user's previous navigation requests.

The familiarity scoring engine 62 uses the descriptions of maneuvers and the user-specific data to generate a familiarity score for each maneuver. For example, if the maneuver is reflected in the user's past driving data, and if it is also determined the user is close to home (e.g., within 2 miles), the familiarity score may be very high. In some implementations, if the familiarity score is above a certain threshold, the familiarity scoring engine 62 generates a "familiar" signal indicating that the user is familiar with the maneuver, and a "not familiar" signal indicating that the user is not familiar with the maneuver otherwise. In other implementations, the familiarity scoring engine 62 may send the "raw" familiarity score directly to the speech generation system 44.

In some cases, the familiarity scoring engine 62 can receive a signal indicative of whether the driver owns or is renting the vehicle. For example, referring back to Fig. 2A, the head unit 14 can provide identification information (e.g., a vehicle identification number, a machine address of a communication port on the head unit 14, a serial number) to the portable device 10. The portable device 10 can determine whether it has previously received this identification information and, based on this determination, adjust a metric of the probability that the vehicle is a rental. More specifically, the portable device 10 can make this determination by comparing identification information received from the head unit 14 to identification information in the user profile. In another embodiment, the portable device 10 receives other parameters from the head unit 14 that indirectly suggest the user probably has previously driven the vehicle. For example, the portable device 10 may compare previous navigation requests reflected in the user profile with previous routes stored in the head unit 14. Based on the comparison, the portable device 10 can adjust the metric of probability that the vehicle is a rental.

If the vehicle is a rental, the familiarity scoring engine 62 in some cases may categorize a location as being unfamiliar to the user. In other words, the familiarity scoring engine 62 can use this determination as one of several signals when determining whether a "familiar" or "not familiar" signal should be generated.

In addition to "familiar" and "not familiar" signals for various maneuvers, the speech generation system 44 also can receive an indication of the current state of the head unit from a register 74 and an indication of the current state of the vehicle from a register 76, at the time each audio instruction is generated. The state of the vehicle head unit 74 can be "audio playback" if the speakers of the head unit are playing music, for example. If there is no audio currently coming from the head unit, the state may be "idle." In addition, there may be separate states depending on the volume of the audio playback such as "audio high" or "audio low." In some implementations, depending on the volume of the audio playback, the instruction may be played at a higher or lower volume. For example, if the head unit is in state "audio low" the speech generation system 44 may generate audio instructions at a lower volume to decrease driver distraction. In the example scenario of Fig. 5, the state of the vehicle head unit 74 is separately determined for a respective time interval for each maneuver. Thus, the head unit is in the "idle" state for maneuver 1, the "audio playback" state for maneuver 2, and returns to the "idle" state for maneuvers 3-5.

Referring back to Fig. 2A, the state of the vehicle 76 can be determined by the sensors 28 in the head unit 14, the sensors in the portable device 10, and/or the audio inputs 24 and 32 of the head unit 14 and the portable device 10 respectively. The state of the vehicle 76 can be "vehicle stationary" if the vehicle is not moving, or "vehicle moving," for example. There also may be separate states depending on the speed of the vehicle. In some implementations, the speech generation system 44 may generate shorter directions if the vehicle is travelling at high speeds and there is a short distance before the next maneuver. Moreover, the state of the vehicle may also be "turn indicator on" if one of the turn signals is blinking. In some implementations, the state of the vehicle may be a combination of the speed of the vehicle and the state of the turn signal.

In the example scenario of Fig. 5, the familiarity scoring engine 62 generates a "not familiar" signal 64 for maneuver 1. At this time, the vehicle head unit is in the "idle" state and the state of the vehicle is "vehicle stationary." As a result, the speech generation system 44 generates a "long," or complete, audio instruction 80 corresponding to the full-length text description of maneuver 1 included in the detailed directions 90. For example, the audio instruction 80 can be "In 300 meters, turn left onto Main Street."

For maneuver 2, the familiarity scoring engine 62 also generates a "not familiar" signal 66. However, the state of the vehicle head unit at this time is "audio playback," and the state of the vehicle is "vehicle moving." In this instance, the speech generation system 44 determines the user does not have time for a lengthy instruction because the vehicle is moving, and the user is listening to music and probably does not want to be interrupted. Consequently, the speech generation system 44 generates a short audio instruction 82 which omits some of the text from the full-length description of maneuver 2.

In general, instructions can be shortened in any suitable manner, which may be language-specific. In an example implementation, the speech generation system 44 shortens audio instructions when appropriate by removing non-essential information, such as an indication of distance between the current location of the vehicle and the location of the upcoming maneuver or an indication of the road type following the proper name of the road ("Main" instead of "Main Street"). For example, a detailed audio instruction describing maneuver 2 may be "In 600 meters, turn right onto Central Street," and the speech generation system 44 can output "Turn right onto Central" as the short audio instruction 82.

For maneuver 3, the familiarity scoring engine 62 generates a "familiar" signal 68. For example, maneuver 3 may be a part of one of the user's preferred routes, as indicated in the user profile. While the vehicle head unit is in the "idle" state, the speech generation system 44 generates a short audio instruction 84 because of the user's familiarity and the vehicle is moving. However, before generating the audio instruction, the speech generation system 44 also examines the next maneuver to determine whether both maneuvers are "familiar" to the user and, as such, can be combined into one shortened audio instruction describing both maneuvers.

Further, the familiarity scoring engine 62 generates a "familiar" signal 70 for maneuver 4. The speech generation system 44 then generates a short audio instruction 86 describing maneuver 4 and reduces the interval between the instructions 84 and 86 to zero. In other words, the speech generation system 44 combines the short instructions 84 and 86 into a single instruction. For example, a combined audio instruction 84,86 can be "Turn right onto Elm Street and merge onto Highway 34 in 500 meters." The speech generation system 44 then may continue to look ahead to further maneuvers to potentially combine even more instructions, until there is a maneuver for which the familiarity scoring engine 62 generates a "not familiar" signal.

With continued reference to Fig. 5, the speech generation system 44 receives a "not familiar" signal 72 for maneuver 5 and determines that the vehicle head unit is in the "idle" state. The speech generation system 44 further determines that the turn indicator consistent with maneuver 5 is activated (e.g., by receiving the corresponding indication from the head unit). For example, if maneuver 5 includes making a left turn in relatively short time, and the left turn indicator is on, the speech generation system 44 can determine that the driver probably knows that a turn is coming, and may shorten the audio instruction. However, if maneuver 5 does not involve turning, then the "turn indicator on" state has no bearing on the audio instruction and may have just been left on from an earlier maneuver. Additionally, if maneuver 5 is a confirmation instruction, such as "Turn left in 300 meters" after a previous instruction of "Turn left in one mile," the speech generation system 44 may skip the audio instruction altogether.

### Example schematic diagrams for processing gesture inputs

Now referring to Fig. 6A and with continued reference to Figs. 1C, 2C and the techniques for processing gesture inputs in an automotive UI, the pagination gesture controller 49 processes gesture input and controls the display of items A - I via the touchscreen 18, in an example scenario. For ease of illustration, the items A - I in this example are rendered as graphics and/or text elements of substantially the same size. The pagination gesture controller 49 receives parameters describing the dimensions of the touchscreen 18 (e.g., length, width) to determine how many of the items A - I can fit on the touchscreen 18 at a time, according to one implementation. In the example illustrated in Fig. 6A, the pagination gesture controller 49 determines that up to three items can be displayed on the touchscreen 18.

Each of the items A - I can be an informational card that describes a point of interest that matches certain criteria, for example. As a more specific example, the driver may have requested that coffee shops along a path to a selection destination be displayed. Each of items A - I accordingly can include an address of the coffee shop, a photograph of the coffee shop, hours of operation, etc. The navigation service application 48 can receive data describing items A - I and organize the data into an ordered list, so that item B follows item A, item C follows item B, etc.

The pagination gesture controller 49 can update the display of subsets of the items A - I in response to gesture-based input received via the touchscreen 18. More particularly, the pagination gesture controller 49 updates display layout 102 to display layout 104 in response to a flick or swipe gesture 110, and then updates the display layout 104 to display layout 106 in response to a subsequent flick gesture 112. The swipe gestures 110 and 112 are applied in approximately the same horizontal direction, but the velocity of the swipe gesture 110 is substantially higher than the velocity of the swipe gesture 112, as represented by the represented in Fig. 6A by the respective lengths of arrow 110 and 112.

In the initial display layout 102, a set of displayed items 120 includes items A, B, and C. When the user applies the relatively quick flick gesture 110, the pagination gesture controller 44 determines the direction of the gesture 110 and advances the list to display a new set 130 including items D, E, F. The user then applies the relatively slow flick gesture 112, and the pagination gesture controller 44 advances the list to display a new set 140 including items G, H, and I. Thus, in both instances the pagination gesture controller 44 ensures that a new set of items is displayed in response to a flick gesture, and that no item is skipped over when transitioning to a new set, regardless of how quick the particular instance of the flick gesture is.

The pagination gesture controller 49 in this example determines how far the list should progress in response to a flick gesture further in view of the size of the touchscreen 18 or of the viewable area currently available on the touchscreen 18. Similarly, if the user applies the flick gesture to the touchscreen on the portable device 10, the pagination gesture controller 44 can determine how many items can be displayed at a time in view of the dimensions of the touchscreen of the portable device 10. Thus, the pagination gesture controller 44 can traverse the same set of items A - I by displaying only pairs of items in response to successive flick gestures: (item A, item B) followed by (item C, item D), followed by (item E, item F), etc.

In the example of Fig. 6A, the sets 120, 130, and 140 are non-overlapping. In other implementations, however, these can overlap in a certain controlled manner so as to provide additional assurance to the driver that no items have been missed. Such implementations are discussed in more detail with reference to Fig. 6B below.

Referring now to Fig. 6B and still referring to Figs. 1C and 2C, the navigation service 48 can display an interactive digital map made up of map tiles 1-A, 1-B, ... 5-G via the touchscreen 18. The map tiles can be implemented as square images of a certain fixed size for a particular zoom level. In this example scenario, the series of display layouts 200 includes an initial display layout 202, a second display layout 204 generated in response to the flick gesture 210, and a third display layout 206 generated in response to the flick gesture 212 following the flick gesture 210.

The initial display layout 202 includes an array of map tiles 220, which includes a first row of tiles 1-A, 1-B, and 1C, a second row of tiles 2-A, 2-B, and 2-C, etc. In response to the relative slow flick gesture 210, the pagination gesture controller 44 displays a new array of map tiles 230, which shares only column C (i.e., map tiles 1-C, 2-C, ... 5-C) with the array of map tiles 220 and includes new columns D and E. Further, in response to the relatively quick flick gesture 212, the pagination gesture controller 44 displays a new array of map tiles 240, which shares only column E (i.e., map tiles 1-E, 2-E, ... 5-E) with the array of map tiles 230 and includes new columns F and G.

Similar to the scenario of Fig. 6A, the pagination gesture controller 49 in Fig. 6B advances an array of map tiles by the same fixed amount, which may be dependent on the size of the touchscreen 18, in response to flick gestures of significantly different velocities. However, in this scenario the pagination gesture controller 49 generates an overlap between successive generations of a display to provide additional assurance to the user that she did not inadvertently skip over a part of a digital map by flicking too fast. Moreover, the driver need not try to flick fast enough to sufficiently advance the list, as the pagination gesture controller 49 will advance the array of map tiles by the fixed amount even if the gesture is slow.

If desired, each column of map tiles in Fig. 6B can be regarded as an item similar to the items A - I of Fig. 6A. Thus, the pagination gesture controller 49 can be considered to operate on a list having a single dimension rather than a two-dimensional array. However, if the flick gesture is applied to a tile-based digital map vertically rather than horizontally, rows rather than columns of map tiles should be regarded as defining individual items.

### Example flow diagram for dynamically varying the length of audio instructions

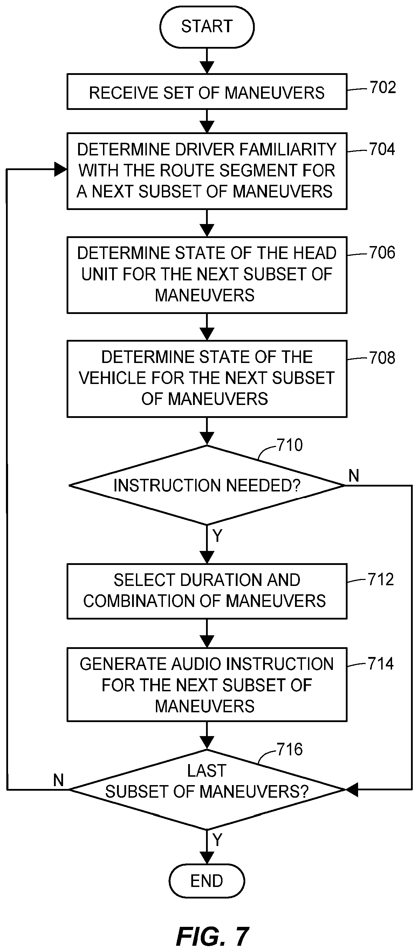

Now referring to Fig. 7, an example method for generating audio instructions by the speech generation system 44 of Fig. 2A (or another suitable system) is shown. The method can be implemented in a set of instructions stored on a computer-readable memory and executable on one or more processors of the portable device 10, for example. More generally, the method of Fig. 7 can be implemented in a user device, a network server, or partially in a user device and partially in a network server.

The method begins at block 702, where a description of a set of maneuvers is received. Depending on the implementation, the description can be received from another device (e.g., a navigation server accessible via a communication network) or from another software component operating in the same device. The description of maneuvers can be provided in any suitable format, including an alphanumeric string in which descriptions of individual maneuvers are separated by a semicolon.

At block 704, a subset of maneuvers received at block 702 is selected. The subset in many cases includes as little as a single maneuver. However, the subset can include multiple maneuvers when the corresponding audio instructions are combined. Also, the user's familiarity with the route segment(s) corresponding to the maneuver(s) in the subset is determined at block 704, using the techniques discussed above or other suitable techniques.

At blocks 706 and 708, the state of vehicle head unit and the state of the vehicle, respectively are determined. Next, the method determines whether an audio instruction is needed at block 710 using the results of the determinations at blocks 704, 706, and 708. As discussed above, an audio instruction sometimes can be omitted. If no audio instruction is needed, the flow proceeds to block 716 to determine whether another next subset of maneuvers should be considered.

Otherwise, if it is determined that an audio navigation instruction is needed, the flow proceeds to block 712, where the duration of one or more audio instructions in the subset is determined. The method also can determine at block 712 whether the next maneuver should be considered as part of the subset, or whether there should be an interval between the audio instructions about the one or more maneuvers in the subset and the audio instruction related to the subsequent maneuver.

The method then proceeds to block 714 to generate the audio instruction for each maneuver or combination of maneuvers. At block 716, it is determined whether every maneuver has been considered as part of one of the subsets, and terminates if there are no maneuvers left. Otherwise, the flow proceeds back to block 704 to select the next subset of maneuvers.

### Example flow diagrams for enabling communication between a secondary device and a vehicle head unit

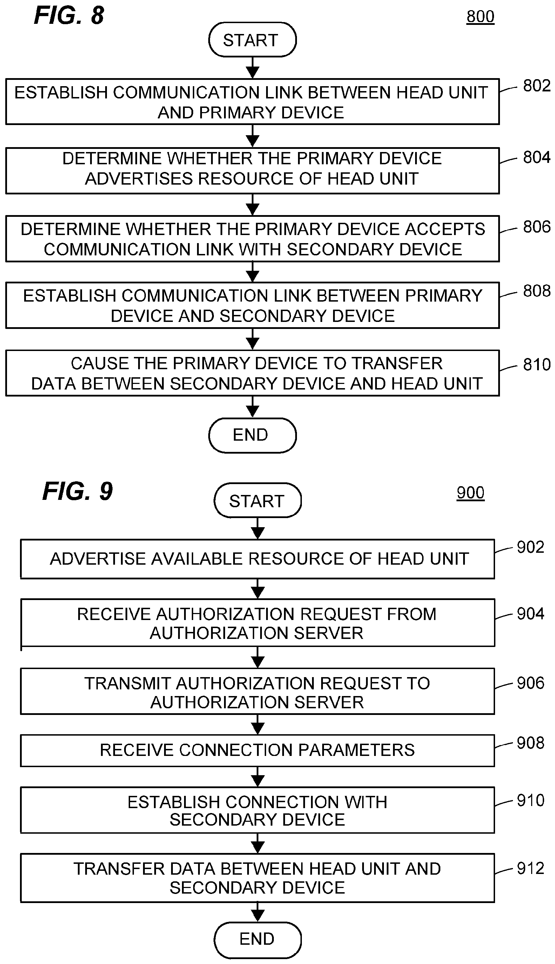

Now referring to Fig. 8, an example method 800 for establishing a connection between a primary device and secondary device can be implemented as a set of instructions stored on a computer-readable memory and executable on one or more processors. In an example embodiment, the method 800 is implemented in the authorization server 59 of Fig. 3B.

The method begins at block 802, where a communication link is established between the head unit and primary device. In a typical scenario, the communication link is a short-range communication link, such as a USB, Bluetooth wireless connection, etc. Next, at block 804, it is determined whether the primary device is advertising an available resource of the head unit. For example, the advertised resource of the head unit may be a display, a speaker, a hardware input control, etc.

At block 806, it is determined whether the primary device accepts the communication link with the secondary device. In a typical scenario, the driver submits an input via the primary device to accept the communication link. At block 808, a communication link is established between the primary device and the secondary device, and the method 800 completes after block 810.

Referring to Fig. 9, a method 900 for establishing a connection between a primary device and secondary device is implemented in a portable device that has access to the head unit of a car. Similar to the method 800, the method 900 can be implemented as a set of computer-readable instructions stored on a computer-readable memory and executable on one or more processors.

The method begins at block 902, where a candidate primary device advertises an available resource of a head unit. At block 904, the candidate primary device receives an authorization request from the authorization server. In a typical scenario, the authorization request includes the device identifier and/or an additional descriptor of the device requesting authorization to connect. The driver may submit a user input using the primary device to accept the authorization request. In some embodiments, the primary device advertises an available resource of the head unit via a social networking service.

At block 906, the candidate primary device confirms the authorization permission request by transmitting the authorization request to the authorization server. At block 908, the candidate primary device receives connection parameters from the secondary device. Next, at block 910, the candidate primary device uses the connection parameters to establish a connection with a secondary device, and begins to operate as the primary device. Once the connection is established, at block 912 the primary device can transfer data between the head unit and secondary device. Depending on the implementation, the transfer is unidirectional (e.g., from the secondary device to the head unit) or bidirectional (e.g., from the secondary device to the head unit as well as from the head unit to the secondary device). Further, the head unit in some embodiments receives status updates, user commands, etc. from the head unit and generates messages for the secondary device according to a communicate scheme defined between the primary and second devices. In other words, the primary device can implement robust functionality to support communications between the secondary device and the head unit, if desired. The method completes after block 912.

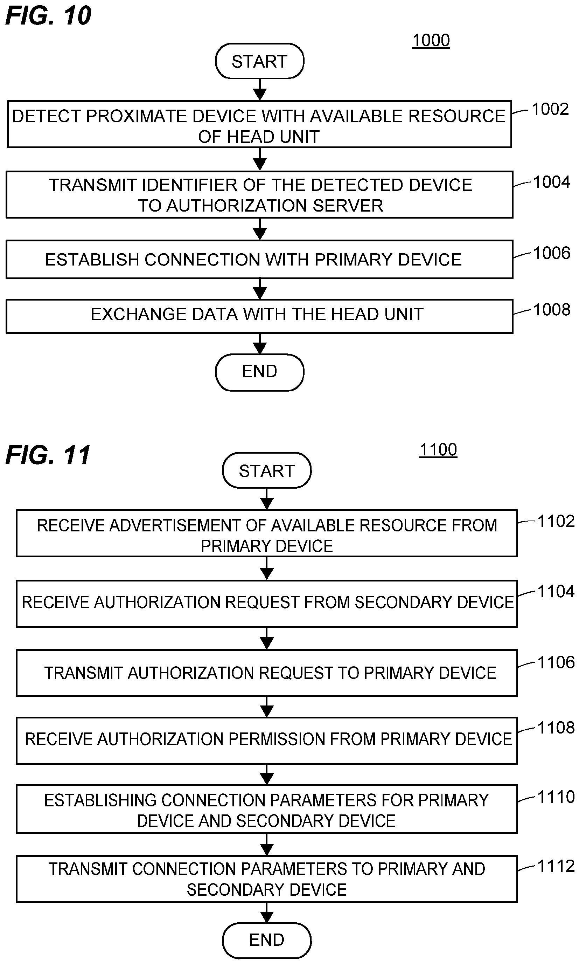

Now referring to Fig. 10, an example method 1000 for establishing a connection with a head unit of a vehicle via a proximate portable device can be implemented as a set of computer-executable instructions stored on a computer-readable memory and executable on one or more processors of the secondary device 11, for example.

The method begins at block 1002, where the secondary device detects a proximate device with an available resource of head unit. In a typical scenario, the secondary device transmits a request to the authorization server requesting available resources within a proximate distance. The authorization server responds to the request by providing the secondary device of the device identifier(s) in proximate distance advertising available resources.

At block 1004, the secondary device transmits an authorization request to the authorization server including the device identifier of the primary device to which the secondary device is requesting permission to connect. Next, at block 1006, the secondary device receives connection parameters from the authorization server and establishes a connection with the primary device. At block 1008, the secondary device may exchange data with the head unit of the vehicle via the primary device. The method completes after block 1008.

Now referring to Fig. 11, an example method 1100 for establishing a connection between a pair of portable devices located in a same vehicle also can be implemented as a set of instructions stored in a computer-readable memory and executable by one or more processors. In an example embodiment, the method 1100 is implemented in the authorization server 59 of Fig 3B.

The method begins at block 1102, where a message from a candidate primary device advertising an available resource of a head unit is received. In one implementation, the authorization server stores the device identifier of the candidate primary device as well as a descriptor of the resource being advertised. After a candidate secondary device "discovers" the candidate primary device using short-range communications or via a network server, an authorization request from the candidate secondary device is received at block 1104. The authorization request can include the device identifier of the candidate primary device to which the candidate secondary device is requesting permission to connect.

Next, at block 1106, the device identifier and available resource(s) of the proximate candidate primary device are transmitted to the candidate secondary device. At block 1108, an authorization permission message is received from the candidate primary device. For example, the user of the candidate primary device can accept the connection via the user interface. At block 1110, connection parameters are determined and, at block 1112, the connection parameters are transmitted to the primary and secondary devices. The method completes after block 1112.

### Example flow diagram for processing automotive UI gestures

Fig. 12 illustrates an example method 1200 for processing automotive UI gestures which can be implemented as a set of computer-readable instructions in any suitable programming language, and stored on a non-transitory computer-readable medium such as the memory 38 of Fig. 2C or the memory 27 of Fig. 2C, for example. In an example embodiment, the method 1200 is implemented in the pagination gesture controller 49 of Fig. 2C.

At block 1202, an ordered set of items is received. As discussed above, the ordered set can be organized along a single dimension (e.g., a list of search results arranged in the order of relevance), two dimensions (e.g., an array of map tiles arranged into a grid), or a higher number of dimensions. Each item can include graphics content, text content, etc.

At block 1204, a first subset of the items is displayed via automotive UI, along at least one axis. For example, items A - I in Fig. 6A are arranged along a horizontal axis, and the map tiles in Fig. 6B are arranged along a horizontal axis as well as along a vertical axis. More generally, the items can be arranged a single or multiple axis having any suitable orientation. The number of items in the first subset, as well as in the subsequently selected subsets, can depend on the size of the screen, for example.

A gesture with a motion component along the at least one axis is received at block 1206. The gesture can be a flick gesture applied horizontally, vertically, diagonally, etc. Further, the gesture can have motion parameters in two dimensions or three dimensions. More particularly, the gesture can be detected via a touchscreen or in a 3D space in an automotive environment.

Next, at block 1208, a new subset of the items is selected for display independently of the velocity of the gesture. The new subset can be made up of several items that immediately follow the items previously being displayed. Depending on the implementation, the new subset can have some overlap or no overlap with the previously displayed subset.

### Additional considerations

The following additional considerations apply to the foregoing discussion. Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented as separate components.

Additionally, certain embodiments are described herein as including logic or a number of components, modules, or mechanisms. Modules may constitute either software modules (e.g., code embodied on a machine-readable medium or in a transmission signal, wherein the code is executed by a processor) or hardware modules. A hardware module is a tangible unit capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as a hardware module that operates to perform certain operations as described herein.

In various embodiments, a hardware module may be implemented mechanically or electronically. For example, a hardware module may comprise dedicated circuitry or logic that is permanently configured (e.g., as a special-purpose processor, such as a field programmable gate array (FPGA) or an application-specific integrated circuit (ASIC)) to perform certain operations. A hardware module may also comprise programmable logic or circuitry (e.g., as encompassed within a general-purpose processor or other programmable processor) that is temporarily configured by software to perform certain operations. It will be appreciated that the decision to implement a hardware module mechanically, in dedicated and permanently configured circuitry, or in temporarily configured circuitry (e.g., configured by software) may be driven by cost and time considerations.

Accordingly, the term "hardware module" should be understood to encompass a tangible entity, be that an entity that is physically constructed, permanently configured (e.g., hardwired), or temporarily configured (e.g., programmed) to operate in a certain manner or to perform certain operations described herein. As used herein "hardware-implemented module" refers to a hardware module. Considering embodiments in which hardware modules are temporarily configured (e.g., programmed), each of the hardware modules need not be configured or instantiated at any one instance in time. For example, where the hardware modules comprise a general-purpose processor configured using software, the general-purpose processor may be configured as respective different hardware modules at different times. Software may accordingly configure a processor, for example, to constitute a particular hardware module at one instance of time and to constitute a different hardware module at a different instance of time.

Hardware modules can provide information to, and receive information from, other hardware modules. Accordingly, the described hardware modules may be regarded as being communicatively coupled. Where multiple of such hardware modules exist contemporaneously, communications may be achieved through signal transmission (e.g., over appropriate circuits and buses) that connect the hardware modules. In embodiments in which multiple hardware modules are configured or instantiated at different times, communications between such hardware modules may be achieved, for example, through the storage and retrieval of information in memory structures to which the multiple hardware modules have access. For example, one hardware module may perform an operation and store the output of that operation in a memory device to which it is communicatively coupled. A further hardware module may then, at a later time, access the memory device to retrieve and process the stored output. Hardware modules may also initiate communications with input or output devices, and can operate on a resource (e.g., a collection of information).

The methods 700, 800, 900, 1000, 1100, and 1200 may include one or more function blocks, modules, individual functions or routines in the form of tangible computer-executable instructions that are stored in a non-transitory computer-readable storage medium and executed using a processor of a computing device (e.g., a server, a personal computer, a smart phone, a portable device, a 'secondary' portable device, a vehicle head unit, a tablet computer, a head mounted display, a smart watch, a mobile computing device, or other personal computing device, as described herein). The methods 700, 800, 900, 1000, 1100, and 1200 may be included as part of any backend server (e.g., a navigation server, a familiarity scoring server, an authorization server, or any other type of server computing device, as described herein), portable device modules, or vehicle head unit modules of an automotive environment, for example, or as part of a module that is external to such an environment. Though the figures may be described with reference to the other figures for ease of explanation, the methods 700, 800, 900, 1000, 1100, and 1200 can be utilized with other objects and user interfaces. Furthermore, although the explanation above describes steps of the methods 700, 800, 900, 1000, 1100, and 1200 being performed by specific devices (such as a portable device 10, a secondary device 11, and a vehicle head unit 14), this is done for illustration purposes only. The blocks of the methods 700, 800, 900, 1000, 1100, and 1200 may be performed by one or more devices or other parts of the automotive environment.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor-implemented. For example, at least some of the operations of a method may be performed by one or more processors or processor-implemented hardware modules. The performance of certain of the operations may be distributed among the one or more processors, not only residing within a single machine, but deployed across a number of machines. In some example embodiments, the processor or processors may be located in a single location (e.g., within a home environment, an office environment or as a server farm), while in other embodiments the processors may be distributed across a number of locations.

The one or more processors may also operate to support performance of the relevant operations in a cloud computing environment or as a software as a service (SaaS). For example, as indicated above, at least some of the operations may be performed by a group of computers (as examples of machines including processors), these operations being accessible via a network (e.g., the Internet) and via one or more appropriate interfaces (e.g., application programming interfaces (APis)).

The performance of certain of the operations may be distributed among the one or more processors, not only residing within a single machine, but deployed across a number of machines. In some example embodiments, the one or more processors or processor-implemented modules may be located in a single geographic location (e.g., within a home environment, an office environment, or a server farm). In other example embodiments, the one or more processors or processor-implemented modules may be distributed across a number of geographic locations.

Still further, the figures depict some embodiments of the automotive environment for purposes of illustration only. One skilled in the art will readily recognize from the following discussion that alternative embodiments of the structures and methods illustrated herein may be employed without departing from the scope of the claims.

Upon reading this disclosure, those of skill in the art will appreciate still additional alternative structural and functional designs for the automotive environment through the disclosed principles herein. Thus, while particular embodiments and applications have been illustrated and described, it is to be understood that the disclosed embodiments are not limited to the precise construction and components disclosed herein. Various modifications, changes and variations, which will be apparent to those skilled in the art, may be made in the arrangement, operation and details of the method and apparatus disclosed herein without departing from the scope of the claims.

## Claims

1. A method for enabling data exchange between portable devices and external output devices, comprising:
determining, by one or more processors (34) of a first portable computing device (10), that a resource is available at a head unit (14) of a vehicle (12), wherein the resource includes at least one of an audio output device and a display device;
providing (402, 902), by the one or more processors, an indication of the available resource to an authorization server (59);
receiving (416, 904), by the one or more processors and from the authorization server, requests for authorization of a first communication link with a first proximate portable computing device (11) and a second communication link with a second proximate portable computing device (11), for use of the indicated available resource;
transmitting (420, 906), by the one or more processors and to the authorization server, authorization permissions for the establishment of the first and second communication links;
receiving (424, 908), by the one or more processors and from the authorization server, parameters for establishing the first and second communication links;
establishing (428, 910), by the one or more processors, the first and second communication links;
causing, by the one or more processors, the first portable computing device to receive data from the first proximate portable computing device via the first communication link,
causing, by the one or more processors, the first portable computing device to receive data from the second proximate portable computing device via the second communication link, and
causing (912), by the one or more processors, the first portable computing device to forward the received data from the first proximate portable computing device or from the second proximate portable computing device to the head unit of the vehicle via a third communication link (16).

2. The method of claim 1, wherein the authorization server (59) provides an indication of the available resource to the first proximate portable computing device.

3. The method of claim 1, further comprising:
causing, by the one or more processors (34), display of a request from the first proximate portable computing device to establish the first communication link and receive a confirmation from a user that the first communication link should be established.

4. The method of claim 3, further comprising:
prior to displaying the request from the first proximate portable computing device, receiving, by the one or more processors (34), a command from the user to advertise a resource available at the head unit (14) to proximate devices.

5. The method of claim 4, wherein the command advertising the resource indicates i) identity of a user operating proximate portable computing device and ii) a type of resource available at the head unit (14).

6. The method of any one of claims 1 to 5, further comprising:
establishing, by the one or more processors (34), the third communication link with the head unit (14), wherein the third communication link is a short-range communication link; and
wherein the first communication link is a short-range wireless link.

7. The method of claim 6, further comprising:
receiving an indication that the first portable computing device (10) is i) proximate to the head unit (14) and ii) available for establishing communication links with the head unit; and
notifying, by the one or more processors (34), the first proximate portable computing device that the first portable computing device is available for establishing the first short-range communication link.

8. The method of claim 7, wherein receiving the indication that the first portable computing device (10) is available for establishing communication links with the head unit (14) includes receiving an indication that a user of the first portable computing device has configured the first portable computing device to advertise its availability to couple portable devices to the head unit.

9. The method of claim 6, further comprising causing, by the one or more processors (34), the first portable computing device (10) to i) receive a command from the head unit (14) via the second short-range communication link and ii) transmit the received command to the first proximate portable device via the first short-range communication link.

10. The method of claim 6, further comprising causing the first portable computing device (10) and the first proximate portable computing device to negotiate the first communication link via an online service, wherein the first portable computing device communicates with the online service via a first long-range communication link, and the first proximate portable computing device communicates with the online service via a second long-range communication link.

11. The method of claim 6, wherein causing the first portable computing device (10) to receive the data from the first proximate portable computing device and transmit the data to the head unit (14) includes streaming digital audio packets from the first proximate portable device to the head unit via the first portable computing device.

12. The method of claim 6, wherein each of the first portable computing device (10) and the first proximate portable computing device is one of a personal communication device operated by a respective user.

13. The method of any of claims 1 to 12 further comprising causing the first portable computing device (10) to generate a digital map of a geographic area, wherein the data transmitted to the head unit (14) via the third communication link includes the digital map.

14. The method of any one of claims 1 to 13, wherein the data transmitted to the head unit includes digital audio packets.

15. A portable computing device, comprising:
one or more processors (34);
a non-transitory computer-readable memory storing thereon instructions that, when executed on the one or more processors, cause the portable computing device (10) to perform the method of any preceding claim.

## Patentansprüche

1. Verfahren zum Ermöglichen von Datenaustausch zwischen tragbaren Geräten und externen Ausgabegeräten, umfassend:
Ermitteln, durch einen oder mehrere Prozessoren (34) eines ersten tragbaren Computergeräts (10), dass eine Ressource an einer Kopfeinheit (14) eines Fahrzeugs (12) verfügbar ist, wobei die Ressource zumindest eines von einem Audioausgabegerät und einem Anzeigegerät beinhaltet;
Bereitstellen (402, 902), durch den einen oder die mehreren Prozessoren, einer Angabe der verfügbaren Ressource an einen Autorisierungsserver (59);
Empfangen (416, 904), durch den einen oder die mehreren Prozessoren und von dem Autorisierungsserver, von Anforderungen zur Autorisierung einer ersten Kommunikationsverbindung mit einem ersten nahen tragbaren Computergerät (11) und einer zweiten Kommunikationsverbindung mit einem zweiten nahen tragbaren Computergerät (11) zur Verwendung der angegebenen verfügbaren Ressource;
Übertragen (420, 906), durch den einen oder die mehreren Prozessoren und an den Autorisierungsserver, von Autorisierungsberechtigungen für die Herstellung der ersten und zweiten Kommunikationsverbindung;
Empfangen (424, 908), durch den einen oder die mehreren Prozessoren und von dem Autorisierungsserver, von Parametern zum Herstellen der ersten und zweiten Kommunikationsverbindung;
Herstellen (428, 910), durch den einen oder die mehreren Prozessoren, der ersten und zweiten Kommunikationsverbindung;
Veranlassen, durch den einen oder die mehreren Prozessoren, dass das erste tragbare Computergerät Daten von dem ersten nahen tragbaren Computergerät über die erste Kommunikationsverbindung empfängt,
Veranlassen, durch den einen oder die mehreren Prozessoren, dass das erste tragbare Computergerät Daten von dem zweiten nahen tragbaren Computergerät über die zweite Kommunikationsverbindung empfängt, und
Veranlassen (912), durch den einen oder die mehreren Prozessoren, dass das erste tragbare Computergerät die empfangenen Daten von dem ersten nahen tragbaren Computergerät oder von dem zweiten nahen tragbaren Computergerät über eine dritte Kommunikationsverbindung (16) an die Kopfeinheit des Fahrzeugs weiterleitet.

2. Verfahren nach Anspruch 1, wobei der Autorisierungsserver (59) eine Angabe der verfügbaren Ressource an das erste nahe tragbare Computergerät bereitstellt.

3. Verfahren nach Anspruch 1, ferner umfassend:
Veranlassen, durch den einen oder die mehreren Prozessoren (34), der Anzeige einer Anforderung von dem ersten nahen tragbaren Computergerät, die erste Kommunikationsverbindung herzustellen und eine Bestätigung von einem Benutzer zu empfangen, dass die erste Kommunikationsverbindung hergestellt werden sollte.

4. Verfahren nach Anspruch 3, ferner umfassend:
vor dem Anzeigen der Anforderung von dem ersten nahen tragbaren Computergerät, Empfangen, durch den einen oder die mehreren Prozessoren (34), eines Befehls von dem Benutzer, eine Ressource, die an der Kopfeinheit (14) verfügbar ist, für nahe Geräte anzukündigen.

5. Verfahren nach Anspruch 4, wobei der Befehl, der die Ressource ankündigt, i) die Identität eines Benutzers, der an dem nahen tragbaren Computergeräts arbeitet, und ii) eine Art von Ressource, die an der Kopfeinheit (14) verfügbar ist, angibt.

6. Verfahren nach einem der Ansprüche 1 bis 5, ferner umfassend: Herstellen, durch den einen oder die mehreren Prozessoren (34), der dritten Kommunikationsverbindung mit der Kopfeinheit (14), wobei die dritte Kommunikationsverbindung eine Kurzstreckenkommunikationsverbindung ist; und
wobei die erste Kommunikationsverbindung eine drahtlose Kurzstreckenverbindung ist.

7. Verfahren nach Anspruch 6, ferner umfassend:
Empfangen einer Angabe, dass das erste tragbare Computergerät (10) i) in der Nähe der Kopfeinheit (14) ist und ii) zur Herstellung einer Kommunikationsverbindungen mit der Kopfeinheit verfügbar ist; und
Benachrichtigen, durch den einen oder die mehreren Prozessoren (34), des ersten nahen tragbaren Computergeräts, dass das erste tragbare Computergerät zum Herstellen der ersten Kurzstreckenkommunikationsverbindung verfügbar ist.

8. Verfahren nach Anspruch 7, wobei das Empfangen der Angabe, dass das erste tragbare Computergerät (10) zum Herstellen von Kommunikationsverbindungen mit der Kopfeinheit (14) verfügbar ist, ein Empfangen einer Angabe beinhaltet, dass ein Benutzer des ersten tragbaren Computergeräts das erste tragbare Computergerät konfiguriert hat, um seine Verfügbarkeit zum Koppeln von tragbaren Geräten mit der Kopfeinheit anzukündigen.

9. Verfahren nach Anspruch 6, ferner umfassend das Veranlassen, durch den einen oder die mehreren Prozessoren (34), dass das erste tragbare Computergerät (10) i) einen Befehl empfängt von der Kopfeinheit (14) über die zweite Kurzstreckenkommunikationsverbindung und ii) den empfangenen Befehl über die erste Kurzstreckenkommunikationsverbindung an das erste nahe tragbare Gerät übermittelt.

10. Verfahren nach Anspruch 6, ferner umfassend das Veranlassen, dass das erste tragbare Computergerät (10) und das erste nahe tragbare Computergerät die erste Kommunikationsverbindung über einen Online-Dienst aushandeln, wobei das erste tragbare Computergerät mit dem Online-Dienst über eine erste Langstreckenkommunikationsverbindung kommuniziert und das erste nahe tragbare Computergerät mit dem Online-Dienst über eine zweite Langstreckenkommunikationsverbindung kommuniziert.

11. Verfahren nach Anspruch 6, wobei das Veranlassen, dass das erste tragbare Computergerät (10) die Daten von dem ersten nahen tragbaren Computergerät empfängt und die Daten an die Kopfeinheit (14) übermittelt, ein Streaming digitaler Audiopakete von dem ersten nahen tragbaren Gerät zu der Kopfeinheit über das erste tragbare Computergerät beinhaltet.

12. Verfahren nach Anspruch 6, wobei sowohl das erste tragbare Computergerät (10) als auch das erste nahe tragbare Computergerät eines einer persönlichen Kommunikationsvorrichtung ist, die von einem jeweiligen Benutzer betrieben wird.

13. Verfahren nach einem der Ansprüche 1 bis 12, ferner umfassend das Veranlassen, dass das erste tragbare Computergerät (10) eine digitale Karte eines geographischen Gebiets erzeugt, wobei die Daten, die über die dritte Kommunikationsverbindung an die Kopfeinheit (14) übermittelt werden, die digitale Karte beinhalten.

14. Verfahren nach einem der Ansprüche 1 bis 13, wobei die an die Kopfeinheit übermittelten Daten digitale Audiopakete beinhalten.

15. Tragbares Computergerät umfassend:
einen oder mehrere Prozessoren (34);
ein nichtflüchtiges computerlesbares Medium, auf dem Anweisungen gespeichert sind, die, bei Ausführung auf dem einen oder den mehreren Prozessoren, das tragbare Computergerät (10) veranlassen, das Verfahren nach einem der vorhergehenden Ansprüche durchzuführen.

## Revendications

1. Procédé d'activation d'échange de données entre des dispositifs portables et des dispositifs de sortie externes, comprenant :
la détermination, par un ou plusieurs processeurs (34) d'un premier dispositif informatique portable (10), du fait qu'une ressource est disponible au niveau d'une unité de tête (14) d'un véhicule (12), dans lequel la ressource comprend au moins l'un parmi un dispositif de sortie audio et d'un dispositif d'affichage ;
la fourniture (402, 902), par les un ou plusieurs processeurs, d'une indication de la ressource disponible à un serveur d'autorisation (59) ;
la réception (416, 904), par les un ou plusieurs processeurs et à partir du serveur d'autorisation, de demandes d'autorisation d'une première liaison de communication avec un premier dispositif informatique portable proche (11) et d'une deuxième liaison de communication avec un deuxième dispositif informatique portable proche (11), pour l'utilisation de la ressource disponible indiquée ;
la transmission (420, 906), par les un ou plusieurs processeurs et au serveur d'autorisation, de permissions d'autorisation pour l'établissement des première et deuxième liaisons de communication ;
la réception (424, 908), par les un ou plusieurs processeurs et à partir du serveur d'autorisation, de paramètres d'établissement des première et deuxième liaisons de communication ;
l'établissement (428, 910), par les un ou plusieurs processeurs, des première et deuxième liaisons de communication ;
le fait d'amener, par les un ou plusieurs processeurs, le premier dispositif informatique portable à recevoir des données à partir du premier dispositif informatique portable proche via la première liaison de communication,
le fait d'amener, par les un ou plusieurs processeurs, le premier dispositif informatique portable à recevoir des données à partir du deuxième dispositif informatique portable proche via la deuxième liaison de communication, et
le fait d'amener (912), par les un ou plusieurs processeurs, le premier dispositif informatique portable à transmettre les données reçues à partir du premier dispositif informatique portable proche ou du deuxième dispositif informatique portable proche à l'unité de tête du véhicule via une troisième liaison de communication (16).

2. Procédé selon la revendication 1, dans lequel le serveur d'autorisation (59) fournit une indication de la ressource disponible au premier dispositif informatique portable proche.

3. Procédé selon la revendication 1, comprenant en outre :
le fait de de provoquer, par les un ou plusieurs processeurs (34), l'affichage d'une demande à partir du premier dispositif informatique portable proche pour établir la première liaison de communication et recevoir une confirmation à partir d'un utilisateur selon laquelle la première liaison de communication doit être établie.

4. Procédé selon la revendication 3, comprenant en outre :
avant l'affichage de la demande à partir du premier dispositif informatique portable proche, la réception, par les un ou plusieurs processeurs (34), d'un ordre à partir de l'utilisateur pour signaler une ressource disponible au niveau de l'unité de tête (14) à des dispositifs proches.

5. Procédé selon la revendication 4, dans lequel l'ordre signalant la ressource indique i) l'identité d'un utilisateur agissant à proximité du dispositif informatique portable et ii) un type de ressource disponible au niveau de l'unité de tête (14).

6. Procédé selon l'une quelconque des revendications 1 à 5, comprenant en outre : l'établissement, par les un ou plusieurs processeurs (34), de la troisième liaison de communication avec l'unité de tête (14), dans lequel la troisième liaison de communication est une liaison de communication à courte portée ; et
dans lequel la première liaison de communication est une liaison sans fil à courte portée.

7. Procédé selon la revendication 6, comprenant en outre :
la réception d'une indication selon laquelle le premier dispositif informatique portable (10) est i) à proximité de l'unité de tête (14) et ii) disponible pour établir des liaisons de communication avec l'unité de tête ; et
la notification, par les un ou plusieurs processeurs (34), du premier dispositif informatique portable proche du fait que le premier dispositif informatique portable est disponible pour établir la première liaison de communication à courte portée.

8. Procédé selon la revendication 7, dans lequel la réception de l'indication selon laquelle le premier dispositif informatique portable (10) est disponible pour établir des liaisons de communication avec l'unité de tête (14) comprend la réception d'une indication selon laquelle un utilisateur du premier dispositif informatique portable a configuré le premier dispositif informatique portable pour signaler sa disponibilité pour coupler des dispositifs portables à l'unité de tête.

9. Procédé selon la revendication 6, comprenant en outre le fait d'amener, par les un ou plusieurs processeurs (34), le premier dispositif informatique portable (10) à i) recevoir un ordre à partir de l'unité de tête (14) via la deuxième liaison de communication à courte portée et ii) transmettre l'ordre reçu au premier dispositif portable proche via la première liaison de communication à courte portée.

10. Procédé selon la revendication 6, comprenant en outre le fait d'amener le premier dispositif informatique portable (10) et le premier dispositif informatique portable proche à négocier la première liaison de communication via un service en ligne, dans lequel le premier dispositif informatique portable communique avec le service en ligne via une première liaison de communication à longue portée, et le premier dispositif informatique portable proche communique avec le service en ligne via une deuxième liaison de communication à longue portée.

11. Procédé selon la revendication 6, dans lequel le fait d'amener le premier dispositif informatique portable (10) à recevoir les données à partir du premier dispositif informatique portable proche et à transmettre les données à l'unité de tête (14) comprend la diffusion en continu de paquets audio numériques du premier dispositif portable proche à l'unité de tête via le premier dispositif informatique portable.

12. Procédé selon la revendication 6, dans lequel chacun du premier dispositif informatique portable (10) et du premier dispositif informatique portable proche est l'un parmi un dispositif de communication personnel mis en œuvre par un utilisateur respectif.

13. Procédé selon l'une quelconque des revendications 1 à 12, comprenant en outre le fait d'amener le premier dispositif informatique portable (10) à générer une carte numérique d'une zone géographique, dans lequel les données transmises à l'unité de tête (14) via la troisième liaison de communication comprennent la carte numérique.

14. Procédé selon l'une quelconque des revendications 1 à 13, dans lequel les données transmises à l'unité de tête comprennent des paquets audio numériques.

15. Dispositif informatique portable, comprenant :
un ou plusieurs processeurs (34) ;
un support non transitoire lisible par ordinateur sur lequel sont stockées des instructions qui, lorsqu'elles sont exécutées par les un ou plusieurs processeurs, amènent un dispositif informatique portable (10) à réaliser le procédé selon l'une quelconque des revendications précédentes.
